(19) Europäisches Patentamt / European Patent Office / Office européen des brevets

(11) **EP 3 709 270 A1**

(12) **EUROPEAN PATENT APPLICATION**

(43) Date of publication:
**16.09.2020 Bulletin 2020/38**

(51) Int Cl.:
***G06T 7/33*** *(2017.01)*   ***G06T 7/521*** *(2017.01)*
***G06T 7/593*** *(2017.01)*

(21) Application number: **20161783.4**

(22) Date of filing: **09.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.03.2019 US 201916299663**

(71) Applicant: **Faro Technologies, Inc.**
**Lake Mary, FL 32746-6204 (US)**

(72) Inventors:
• **PARIAN, Jafar Amiri**
 **70825 Korntal-Münchingen (DE)**
• **WOLKE, Mattias**
 **70825 Korntal-Münchingen (DE)**

(74) Representative: **Harris, Oliver John Richard**
**Novagraaf UK**
**Centrum**
**Norwich Research Park**
**Colney Lane**
**Norwich NR4 7UG (GB)**

(54) **REGISTRATION OF INDIVIDUAL 3D FRAMES**

(57) A three-dimensional (3D) measuring system that includes an external projector and an imager device. The imager device having a projector, a first camera and a second camera. The system further having one or more processors operably coupled to the display, the projector, the first camera and the second camera. The processors are responsive to executable computer instructions when executed on the one or more processors for projecting one or more random patterns on an object, recording one or more stereo images of the object, estimating a position and orientation of an imager device and registering scan data generated from the estimated position and orientation of the imager device into a coordinate system.

FIG. 1

EP 3 709 270 A1

**Description**

FIELD OF THE INVENTION

The subject matter disclosed herein relates in general to a triangulation-type, three-dimensional (3D) imager device, also known as a triangulation scanner.

BACKGROUND OF THE INVENTION

A 3D imager uses a triangulation method to measure the 3D coordinates of points on an object. The 3D imager can be used in conjunction with a projector that projects onto a surface of the object either a pattern of light in a line or a pattern of light covering an area. A camera can be coupled to the projector in a fixed relationship, for example, by attaching a camera and the projector to a common frame. The light emitted from the projector is reflected off the object surface and detected by the camera. Since the camera and projector are arranged in a fixed relationship, the distance to the object may be determined using trigonometric principles. Compared to coordinate measurement devices that use tactile probes, triangulation systems provide advantages in quickly acquiring coordinate data over a large area. As used herein, the resulting collection of 3D coordinate values or data points of the object being measured by the triangulation system is referred to as point cloud data or simply a point cloud.

There are a number of areas in which existing triangulation scanners may be improved, including improved thermal stability and cooling, improved geometries for detecting problems or automatically correcting scanner compensation parameters, improved rejection of background lighting, reduced effect of cooling fan vibration, optimized illumination projection levels, improved ways to measure relatively large objects with relatively high accuracy and high resolution in a relatively short time, improved methods of registering an array of 3D imagers, and a structure configured to simplify proper alignment of 3D imagers to a part-under-test.

Accordingly, while existing triangulation-based 3D imager devices that use photogrammetry methods are suitable for their intended purpose, the need for improvement remains.

BRIEF DESCRIPTION OF THE INVENTION

According to an embodiment of the present invention, a three-dimensional (3D) measuring system is provided. The 3D measuring system includes an external projector and an imager device. The imager device having a projector and one or more cameras arranged in a predetermined geometric relationship, the one or more cameras each having a photosensitive array with a plurality of pixels that transmit a signal in response to a wavelength of light, the projector projecting a pattern of light that includes at least one element at the wavelength of light. The system further having one or more processors operably coupled to the external projector, the projector and the one or more cameras. The processors are responsive to executable computer instructions when executed on the one or more processors for projecting one or more random patterns on an object with the external processor, recording one or more images of the object, estimating a position and orientation of the imager device and registering scan data generated from the estimated position and orientation of the imager device into a coordinate system.

According to this or one or more other embodiments, the system may include the one or more processors being further operable to post-process the one or more images. According to this or one or more other embodiments, the system may include the post-processing of the one or more images includes finding a plurality of projected features within the one or more images, matching the projected features within the one or more images and orienting the one or more images based on the matched projected features. According to this or one or more other embodiments, the system may include the one or more processors being further operable to define a reference coordinate system based on a first scan position using a camera of the one or more cameras. According to this or one or more other embodiments, the system may include the one or more processors being further operable to transfer point coordinates associated with the scan data into the reference coordinate system using the estimated six degrees of freedom.

According to this or one or more other embodiments, the system may include the projected one or more random patterns being blue in color. According to this or one or more other embodiments, the system may include the projected one or more random patterns being one of: a pattern of random blobs in which a pixel is either on or off, a pattern with 2D shapes having multiple structures, a pattern of random blobs in which pixels of the pattern are assigned different values of gray or a pseudo-random dot pattern. According to this or one or more other embodiments, the system may include a projected pseudo-random dot pattern has a Gaussian shape. According to this or one or more other embodiments, the system may include portions of the projected one or more random patterns forming a uniquely coded structure that can be identified in the images.

According to this or one or more other embodiments, the system may include the projected one or more random patterns being one of: a series of patterns, wherein each pattern in the series is generated according to a cosine squared amplitude distribution, a series of patterns, wherein each pattern in the series is generated according to a cosine squared amplitude distribution in which a period is smaller than a single patch or a series of patterns, wherein each pattern in the series is generated based on one of more intensity slopes projected over a full patch or portion of the patch.

According to an embodiment of the present invention, a method of scan data registration is provided. The method includes projecting one or more random patterns on an object. The method further includes recording one or more images of the object. The method further includes estimating a position and orientation of an imager device and registering scan data generated from the estimated position and orientation of the imager device into a coordinate system.

According to this or one or more other embodiments, the method may include post-processing the one or more stereo images. According to this or one or more other embodiments, the method may include the post-processing of the one or more stereo images includes finding one or more projected features within the one or more stereo images, matches the projected features within the one or more stereo images and orienting the one or more stereo images based on the matched projected features. According to this or one or more other embodiments, the method may include estimating six degrees of freedom for the scan data with respect to a reference coordinate system. According to this or one or more other embodiments, the method may include transferring point coordinates associated with the scan data into the reference coordinate system using the estimated six degrees of freedom.

According to this or one or more other embodiments, the method may include the projected one or more random patterns being blue in color. According to this or one or more other embodiments, the method may include the projected one or more random patterns being one of: a pattern of random blobs in which a pixel is either on or off, a pattern with 2D shapes having multiple structures, a pattern of random blobs in which pixels of the pattern are assigned different values of gray or a pseudo-random dot pattern.

According to this or one or more other embodiments, the method may include the projected one or more random patterns being one of: a series of patterns, wherein the series includes a full image and a plurality of sub-images, a series of patterns, wherein each pattern in the series is generated according to a cosine squared amplitude distribution, a series of patterns, wherein each pattern in the series is generated according to a cosine squared amplitude distribution in which a period is smaller than a single patch or a series of patterns, wherein each pattern in the series is generated based on one of more intensity slopes projected over a full patch. According to this or one or more other embodiments, the method may include portions of the projected one or more random patterns forming a uniquely coded structure that can be identified in the images. According to this or one or more other embodiments, the method may include portions of the projected one or more random patterns forming a uniquely coded structure that can be identified in the images.

These and other advantages and features will become more apparent from the following description taken in conjunction with the drawings.

BRIEF DESCRIPTION OF THE DRAWINGS

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which:

FIG. 1 is a perspective view of a 3D imager according to an embodiment;

FIG. 2 is a perspective view of internal elements of a 3D imager having its cover removed according to an embodiment;

FIG. 3 is a perspective view of a projector-camera assembly of a 3D imager according to an embodiment;

FIG. 4 is a top view of internal elements of a 3D imager having its cover removed according to an embodiment;

FIG. 5A is a cross sectional view of the projector-camera assembly according to an embodiment;

FIG. 5B is a perspective view of a light pipe according to an embodiment;

FIG. 6A is a partial perspective view of cooling vents surrounding a projector lens assembly according to an embodiment;

FIG. 6B is a partial perspective view of cooling vents surrounding a camera lens assembly according to an embodiment;

FIG. 6C is a partial perspective view of projector source cooling elements according to an embodiment;

FIG. 7 is a block diagram of electrical components of a 3D imager according to an embodiment;

FIG. 8 is a block diagram of a processor system according to an embodiment;

FIG. 9 is a schematic illustration of the principle of operation of a triangulation scanner having a camera and a projector according to an embodiment;

FIG. 10 is a schematic illustration of the principle of operation of a triangulation scanner having two cameras and one projector according to an embodiment;

FIG. 11 is a perspective view of a scanner having two cameras and one projector arranged in a triangle for 3D measurement according to an embodiment;

FIGs. 12A and 12B are schematic illustrations of the principle of operation of the scanner of FIG. 11;

FIGs. 13A and 13B are schematic illustrations of 3D imagers having wide field-of-view (FOV) lenses and narrow FOV lenses, respectively, according to an embodiment;

FIG. 13C is a schematic representation of camera and projector lenses according to an embodiment;

FIGs. 13D and 13E are schematic representations of ray models used for the camera and projector lenses;

FIG. 14A illustrates projection of a coarse sine-wave pattern according to an embodiment;

FIG. 14B illustrates reception of the coarse sine-wave pattern by a camera lens according to an embodiment;

FIG. 14C illustrates projection of a finer sine-wave pattern according to an embodiment;

FIG. 14D illustrates reception of the finer sine-wave pattern according to an embodiment;

FIG. 15 illustrates how phase is determined from a set of shifted sine waves according to an embodiment;

FIG. 16 is a perspective view of a web support according to an embodiment;

FIG. 17 is a perspective view of an finite-element analysis (FEA) model of the web support when heated according to an embodiment;

FIG. 18 is a cross-sectional view of a projector lens assembly according to an embodiment;

FIGs. 19A, 19B, and 19C are a perspective view, a top view, and a cross-sectional view of a camera assembly, respectively, according to an embodiment;

FIGs. 20A and 20B are top and perspective views of a first camera lens assembly according to an embodiment;

FIGs. 21A, 21B, and 21C are top, first perspective, and second perspective views of a second camera lens assembly according to an embodiment;

FIGs. 22A and 22B show an arrangement for obtaining consistent projector lens assemblies by using a golden projector lens assembly according to an embodiment;

FIGs. 22C and 22D show an arrangement for obtaining consistent camera lens assemblies by using a golden camera lens assembly according to an embodiment;

FIGs. 23A, 23B and 23C illustrate a system for orienting images of an object into one coordinate system and automatically registering scan data associated with the object into a unique coordinate system according to an embodiment;

FIG. 24A, 24B, 24C and 24D shows patterns that can be used when a projector projects a single projected pattern according to an embodiment;

FIG. 24E shows an enlarged portion of the pattern shown in FIG. 24D according to an embodiment;

FIGs. 25A, 25B, 25C and 25D each show multiple patterns that can be used when a projector projects a patterns series according to an embodiment;

FIG. 26 illustrates a flow diagram illustrating a method of scan data registration according to an embodiment; and

FIGs. 27A, 27B and 27C each illustrate a flow diagram illustrating a method of post-processing stereo images according to an embodiment.

The detailed description explains embodiments of the invention, together with advantages and features, by way of example with reference to the drawings.

DETAILED DESCRIPTION OF THE INVENTION

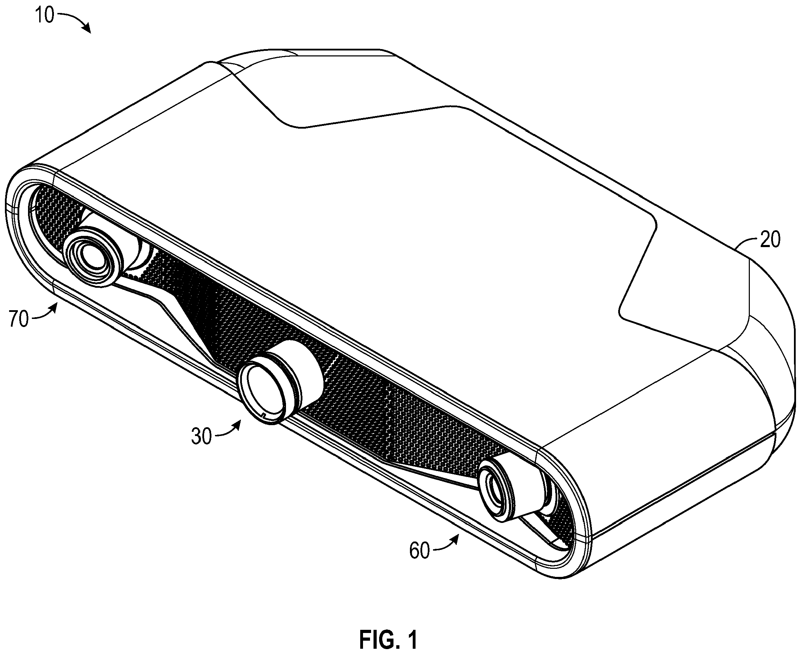

FIG. 1 is a perspective view of a 3D imager 10 according to an embodiment. It includes a frame 20, a projector 30, a first camera assembly 60, and a second camera assembly 70.

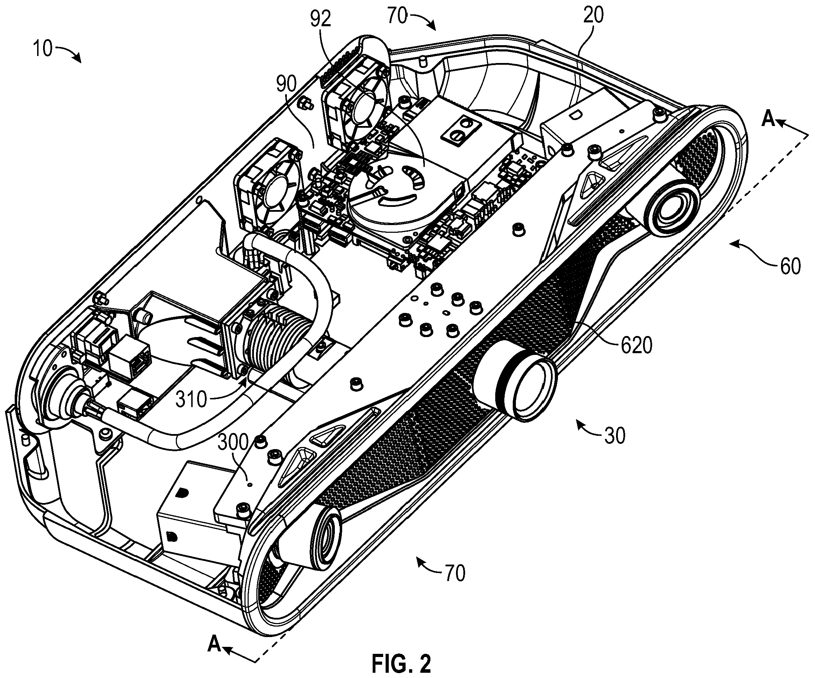

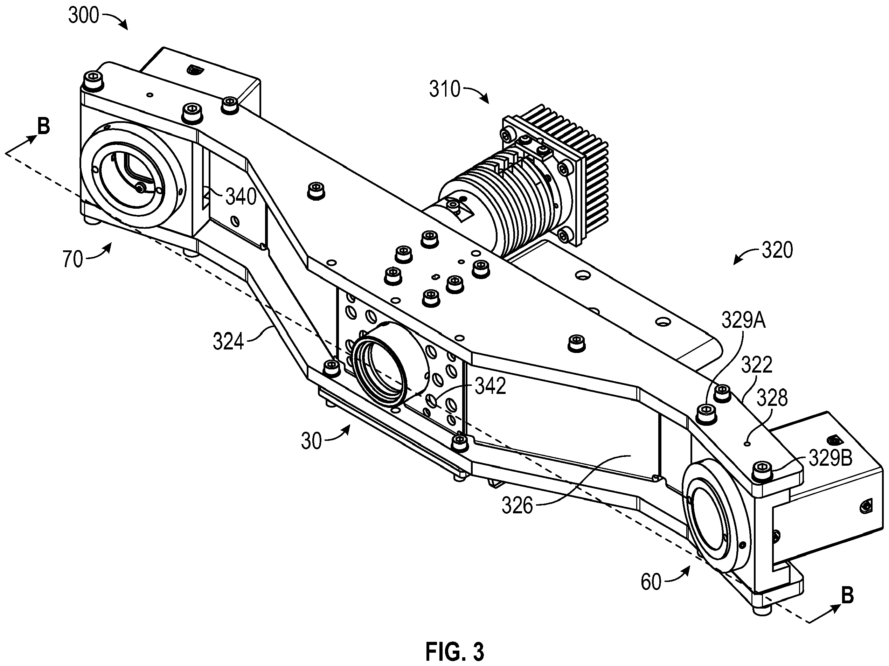

FIG. 2 and FIG. 3 show perspective views of internal elements 70 of the 3D imager 10. Internal elements are enclosed in a lower frame element 20. FIG. 3 shows elements of a projector-camera assembly 300 that includes projector-source assembly 310, projector 30, first camera-lens assembly 60, second camera-lens assembly 70, and support assembly 320. The support assembly 320 includes top structural support 322, bottom structural support 324, and web support 326. In addition, each camera includes mounting pins 328 and screws 329A, 329B.

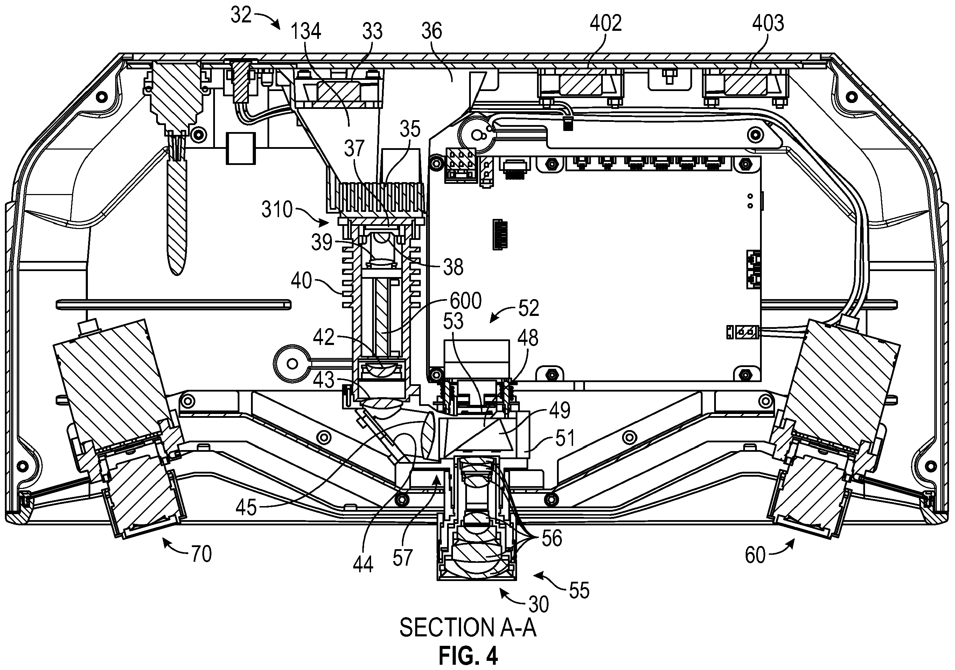

FIG. 4 is a top cross-sectional view of the 3D imager from FIG. 2. The projector lens assembly 30 includes a projector lens 55 and a projector lens mount 57. Projector lens 55 includes projector lens elements 56.

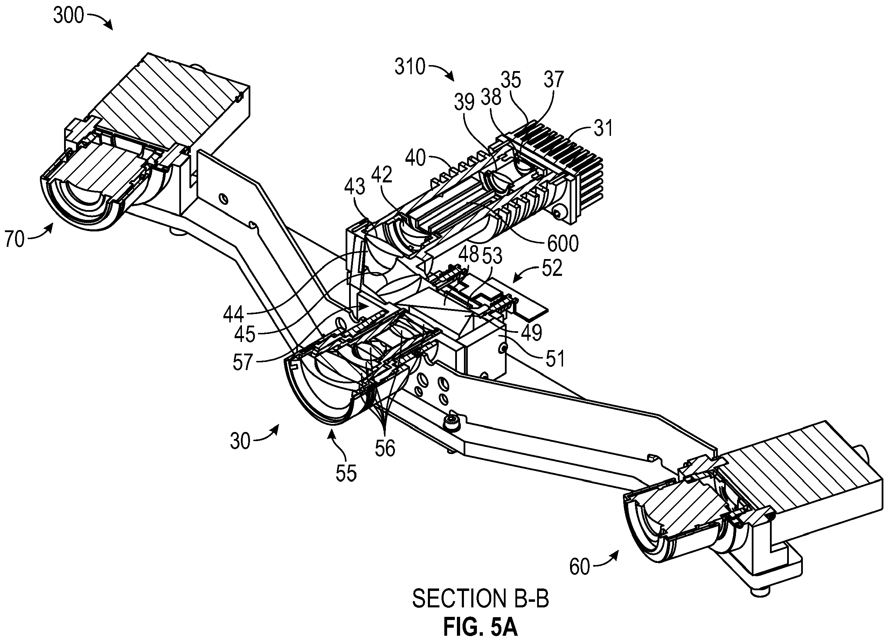

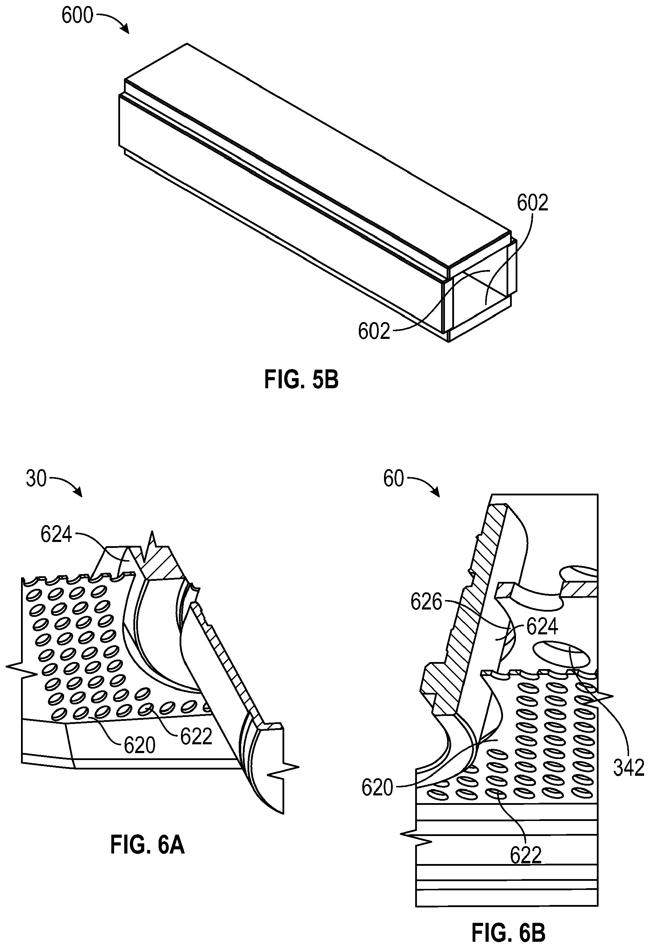

FIG. 5A, which is a cross-sectional view from FIG. 3, shows additional details of projector-source assembly 310 and pattern-projection assembly 52. In an embodiment, the projector-source assembly 310 includes light source 37, condensing lens elements 38, 39, light pipe 600, lenses 42, 43, 44, and mirror 44. In an embodiment, the light source 37 is an LED. The condensing lenses 38, 39 funnel light into the light pipe 600, which is shown in more detail in FIG. 5B. The light type reflects rays of light off reflective surfaces 602 in the light pipe 600. The purpose of the light pipe is to improve the homogeneity of the light from the condenser lenses 38, 39. Light passes through lenses 42 and 43 before reflecting off mirror 44 and passing through lens 45 into the pattern-projection assembly 52.

The pattern-projection assembly 52 includes a first prism 48, a second prism 49, and a digital micromirror device (DMD) 53. Together, the first prism 48 and second prism 49 comprise a total-internal-reflection (TIR) beam combiner. Light from lens 45 strikes an air interface between the first prism 48 and second prism 49. Because of the index of refraction of the glass in the first prism 48 and the angle of the first air interface relative to the light arriving from the lens 45, the light totally reflects toward the DMD 53. In the reverse direction, light reflected off the DMD 53 does not experience TIR and passes either out of the projector lens assembly 30 or onto a beam block 51. In an embodiment, the DMD 53 includes a large number of small micromechanical mirrors that rotate by a small angle of 10 to 12 degrees in either of two directions. In one direction, the light passes out of the projector 30. In the other direction, the light passes onto the beam block 51. Each mirror is toggled very quickly in such a way as to enable reflection of many shades of gray, from white to black. In an embodiment, the DMD chip produces 1024 shades of gray.

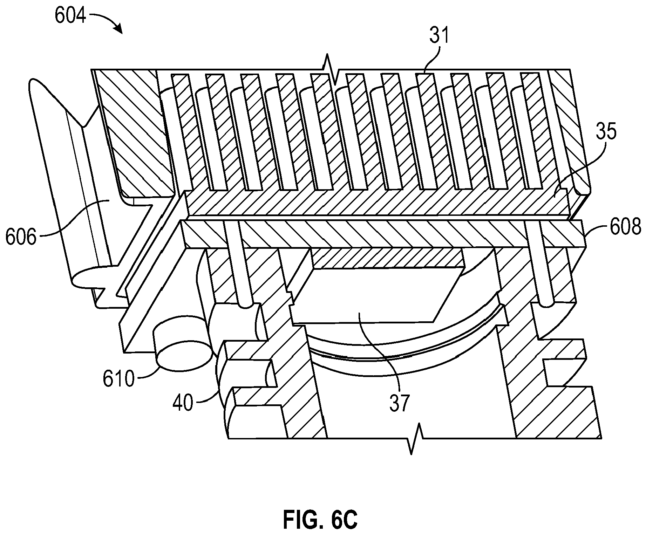

The light source assembly 37 is cooled by projector cooling system 32 shown in FIG. 4. The projector cooling system 32 includes fan 33, chambers 134, 36, and heat sinks 35, 40. In an embodiment, the heat sink 35 includes projections 31 having intervening air spaces, as shown in FIGs. 5A and 6C. In an embodiment, the fan 33 pushes air through chamber 134, through the air spaces separating the projections 31, into the chamber 36, and out the 3D imager 10 through a filtered exit in the frame 20. In this way, relatively cool outside air is forced past the heat sink projections 31, thereby removing heat generated by the light source 37 and stabilizing the temperature of the light source 37. In an embodiment illustrated in partial perspective view 604 in FIG. 6C, the light source 37 is an LED chip mounted to a heat sink element 608 that is in contact with the heat sink 31 and heat sink 40. The heat sink 31 may be in contact with a surrounding heat sink 606. In an embodiment, a temperature sensor 610 is attached to the heat sink 608 to enable monitoring of the LED temperature.

Elements within the frame 20 are cooled by fans 402 and 403 shown in FIG. 4. The fans 402 and 403 pull air out of the cavity, first through holes 622 and openings 624 in a grill vent 620 surrounding the projector 30, the first camera assembly 60, and the second camera assembly 70. The air is pulled through additional openings and holes in the projector-camera assembly 300 such as the opening 340 and the web holes 342 shown in FIG. 3 and the opening 626 shown in FIG. 6B. The air drawn out of the frame 20 by the fans 402 and 403 provides cooling for the projector 30 and the camera assemblies 60, 70, as well as the heat sink 40 and other elements internal to the frame 20. As shown in FIG. 2, in an embodiment further cooling is provided for a circuit board 90 by a fan 92 that pumps heat from the circuit board out of the frame 20 through a dedicated duct.

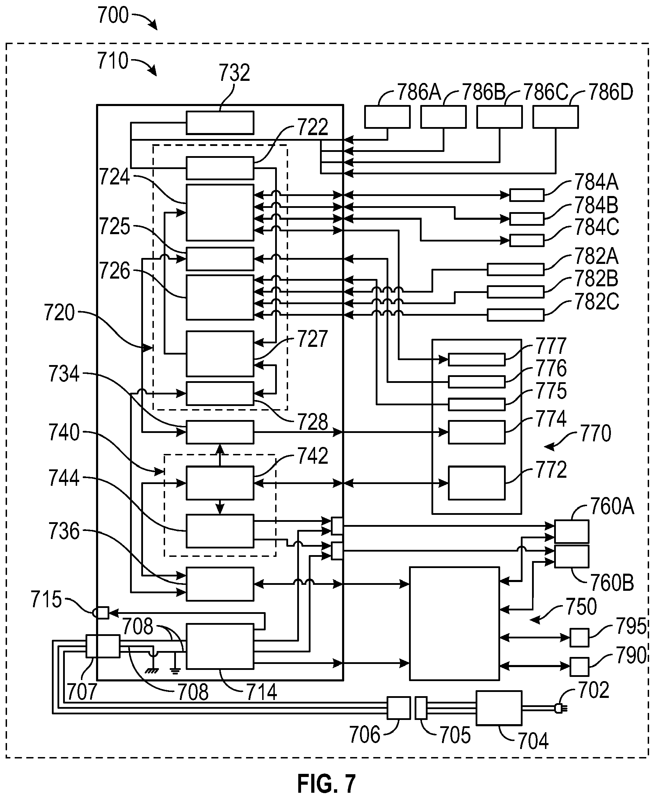

In an embodiment, the 3D imager includes internal electrical system 700 shown in FIG. 7. Internal electrical system 700 includes a Peripheral Component Interface (PCI) board 710, projector electronics 770, a processor board 750, and a collection of additional components discussed herein below. In an embodiment, the PCI board 710 includes a microcontroller integrated circuit 720, DMD controller chip 740, LED driver chip 734, an inertial measurement unit (IMU) chip 732, a Universal Serial Bus (USB) hub 736, and a power conversion component 714.

In an embodiment, the microcontroller integrated circuit 720 is a Programmable System-on-Chip (PSoC) by Cypress Semiconductor. The PSoC includes a central processing unit (CPU) core and mixed-signal arrays of configurable integrated analog and digital peripheral functions. In an embodiment, the microcontroller integrated circuit 720 is configured to serve as (1) a controller 724 for the fans 784A, 784B, and 784C, corresponding to fans 33, 402, and 403 in FIG. 4; (2) a controller for the LED driver chip 736; (3) an interface 726 for thermistor temperature sensors 782A, 782B, and 782C; (4) an inter-integrated circuit (I2C) interface 722; (5) an ARM microcontroller 727; and (6) a USB interface 728. The I2C interface 722 receives signals from the IMU chip 732 and I2C temperature sensors 786A, 786B, 786C, and 786D. It sends signals to an ARM microcontroller 727, which in turn sends signals to the fan controller 724. The DMD controller chip 740 sends high-speed electrical pattern sequences to a DMD chip 772. It also sends output trigger signals to electronics 760A and 760B of the first camera assembly 60 and the second camera assembly 70, respectively. In an embodiment, the IMU includes a three-axis accelerometer and a three-axis gyroscope. In other embodiments, the IMU further includes an attitude sensor such as a magnetometer and an altitude sensor such as a barometer.

The projector electronics 770 includes fan electronics 777, projector photodiode 776, projector thermistor electronics 775, light source electronics 774, and DMD chip 772. In an embodiment, fan electronics 777 provides an electrical signal to influence the speed of the projector fan 33. The projector photodiode 776 measures an amount of optical power received by the DMD chip 772. The projector thermistor electronics 775 receives a signal from a thermistor temperature sensor such as the sensor 610 in FIG. 6C. The sensor 610 may provide a control signal in response. The light source electronics 774 may drive an LED chip 37. In an embodiment, the DMD is a DLP4500 device from Texas Instruments. This device includes 912 x 1140 micromirrors.

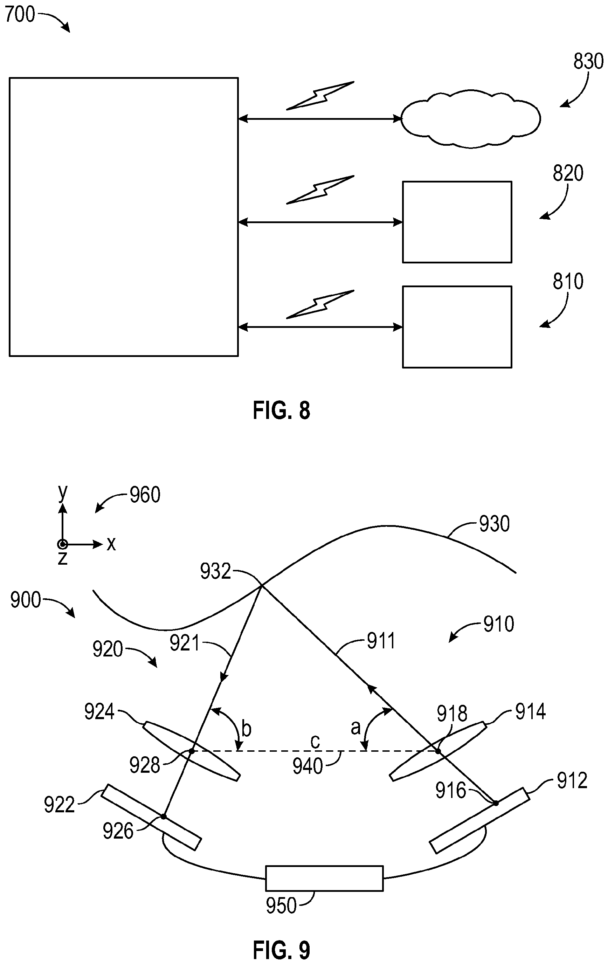

In an embodiment, the processor board 750 is a Next Unit of Computing (NUC) small form factor PC by Intel. In an embodiment, the processor board 750 is on the circuit board 90, which includes an integrated fan header 92, as shown in FIG. 1. In an embodiment, the processor board 750 communicates with camera assemblies 60 and 70 over electronics 760A, 760B via USB 3.0. The processor board 750 performs phase and triangulation calculations as discussed herein below and sends the results over USB 3.0 to the USB 2.0 hub 736, which shares signals with the DMD controller chip 740 and the USB interface 728. The processor board 750 may perform additional functions such as filtering of data or it may send partly processed data to additional computing elements, as explained herein below with reference to FIG. 8. In an embodiment, the processor board 750 further includes a USB 3.0 jack and an RJ45 jack.

In an embodiment, a DC adapter 704 attached to an AC mains plug 702 provides DC power through a connector pair 705, 706 and a socket 707 to the 3D imager 10. Power enters the frame 20 over the wires 708 and arrives at the power conversion component 714, which down-converts the DC voltages to desired levels and distributes the electrical power to components in the internal electrical system 700. One or more LEDs 715 may be provided to indicate status of the 3D imager 10.

FIG. 8 is a block diagram of a computing system that includes the internal electrical system 700, one or more computing elements 810, 820, and a network of computing elements 830, commonly referred to as the cloud. The cloud may represent any sort of network connection (e.g., the worldwide web or internet). Communication among the computing (processing and memory) components may be wired or wireless. Examples of wireless communication methods include IEEE 802.11 (Wi-Fi), IEEE 802.15.1 (Bluetooth), and cellular communication (e.g., 3G and 4G). Many other types of wireless communication are possible. A popular type of wired communication is IEEE 802.3 (Ethernet). In some cases, multiple external processors, especially processors on the cloud, may be used to process scanned data in parallel, thereby providing faster results, especially where relatively time-consuming registration and filtering may be required.

FIG. 9 shows a structured light triangulation scanner 900 that projects a pattern of light over an area on a surface 930. The scanner, which has a frame of reference 960, includes a projector 910 and a camera 920. The projector 910 includes an illuminated projector pattern generator 912, a projector lens 914, and a perspective center 918 through which a ray of light 911 emerges. The ray of light 911 emerges from a corrected point 916 having a corrected position on the pattern generator 912. In an embodiment, the point 916 has been corrected to account for aberrations of the projector, including aberrations of the lens 914, in order to cause the ray to pass through the perspective center, thereby simplifying triangulation calculations.

The ray of light 911 intersects the surface 930 in a point 932, which is reflected (scattered) off the surface and sent through the camera lens 924 to create a clear image of the pattern on the surface 930 on the surface of a photosensitive array 922. The light from the point 932 passes in a ray 921 through the camera perspective center 928 to form an image spot at the corrected point 926. The image spot is corrected in position to correct for aberrations in the camera lens. A correspondence is obtained between the point 926 on the photosensitive array 922 and the point 916 on the illuminated projector pattern generator 912. As explained herein below, the correspondence may be obtained by using a coded or an uncoded (sequentially projected) pattern. Once the correspondence is known, the angles $a$ and $b$ in FIG. 9 may be determined. The baseline 940, which is a line segment drawn between the perspective centers 918 and 928, has a length C. Knowing the angles $a$, $b$ and the length C, all the angles and side lengths of the triangle 928-932-918 may be determined. Digital image information is transmitted to a processor 950, which determines 3D coordinates of the surface 930. The processor 950 may also instruct the illuminated pattern generator 912 to generate an appropriate pattern. The processor 950 may be located within the scanner assembly, or it may be an external computer, or a remote server.

As used herein, the term "pose" refers to a combination of a position and an orientation. In embodiment, the position and the orientation are desired for the camera and the projector in a frame of reference of the 3D imager 900. Since a position is characterized by three translational degrees of freedom (such as $x, y, z$) and an orientation is composed of three orientational degrees of freedom (such as roll, pitch, and yaw angles), the term pose defines a total of six degrees of freedom. In a triangulation calculation, a relative pose of the camera and the projector are desired within the frame of reference of the 3D imager. As used herein, the term "relative pose" is used because the perspective center of the camera or the projector can be located on an (arbitrary) origin of the 3D imager system; one direction (say the x axis) can be selected along the baseline; and one direction can be selected perpendicular to the baseline and perpendicular to an optical axis. In most cases, a relative pose described by six degrees of freedom is sufficient to perform the triangulation calculation. For example, the origin of a 3D imager can be placed at the perspective center of the camera. The baseline (between the camera perspective center and the projector perspective center) may be selected to coincide with the x-axis of the 3D imager. The y-axis may be selected perpendicular to the baseline and the optical axis of the camera. Two additional angles of rotation are used to fully define the orientation of the camera system. Three additional angles of rotation are used to fully define the orientation of the projector. In this embodiment, six degrees-of-freedom define the state of the 3D imager: one baseline, two camera angles, and three projector angles. In other embodiment, other coordinate representations are possible.

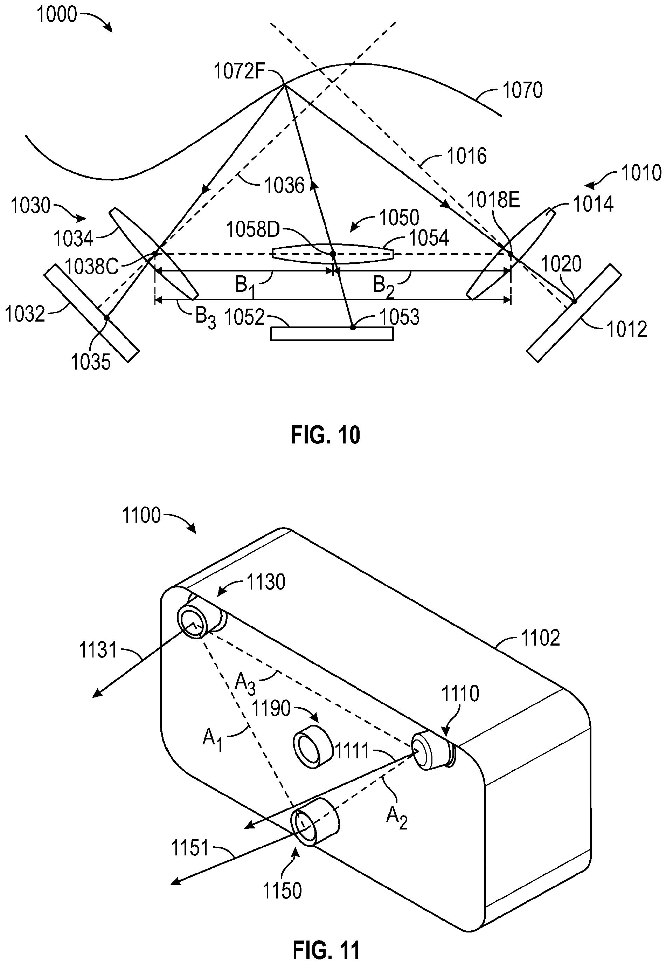

FIG. 10 shows a structured light triangulation scanner 1000 having a projector 1050, a first camera 1010, and a second camera 1030. The projector creates a pattern of light on a pattern generator plane 1052, which it projects from a corrected point 1053 on the pattern through a perspective center 1058 (point D) of the lens 1054 onto an object surface 1070 at a point 1072 (point F). The point 1072 is imaged by the first camera 1010 by receiving a ray of light from the point 1072 through a perspective center 1018 (point E) of a lens 1014 onto the surface of a photosensitive array 1012 of the camera as a corrected point 1020. The point 1020 is corrected in the read-out data by applying a correction factor to remove the effects of lens aberrations. The point 1072 is likewise imaged by the second camera 1030 by receiving a ray of light from the point 1072 through a perspective center 1038 (point C) of the lens 1034 onto the surface of a photosensitive array 1032 of the second camera as a corrected point 1035.

The inclusion of two cameras 1010 and 1030 in the system 1000 provides advantages over the device of FIG. 9 that includes a single camera. One advantage is that each of the two cameras has a different view of the point 1072 (point F). Because of this difference in viewpoints, it is possible in some cases to see features that would otherwise be obscured - for example, seeing into a hole or behind a blockage. In addition, it is possible in the system 1000 of FIG. 10 to perform three triangulation calculations rather than a single triangulation calculation, thereby improving measurement accuracy. A first triangulation calculation can be made between corresponding points in the two cameras using the triangle CEF with the baseline $B_3$. A second triangulation calculation can be made based on corresponding points of the first camera and the projector using the triangle DEF with the baseline $B_2$. A third triangulation calculation can be made based on corresponding points of the second camera and the projector using the triangle CDF with the baseline $B_1$. The optical axis of the first camera 1020 is 1016, and the optical axis of the second camera 1030 is 1036.

FIG. 11 shows 3D imager 1100 having two cameras 1110, 1130 and a projector 1150 arranged in a triangle $A_1$-$A_2$-$A_3$. In an embodiment, the 3D imager 1100 of FIG. 11 further includes a camera 1190 that may be used to provide color (texture) information for incorporation into the 3D image. In addition, the camera 1190 may be used to register multiple 3D images using videogrammetry.

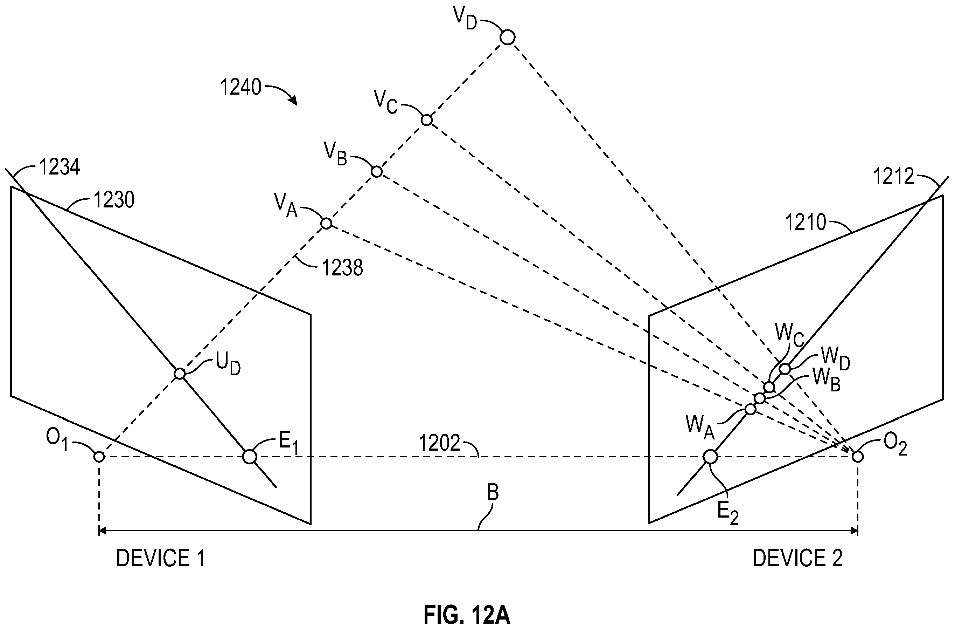

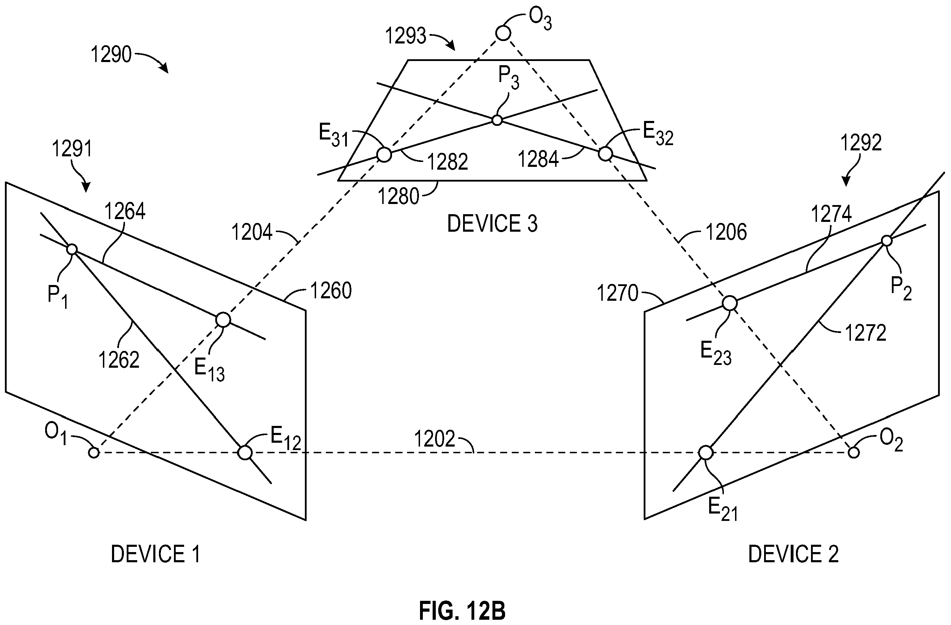

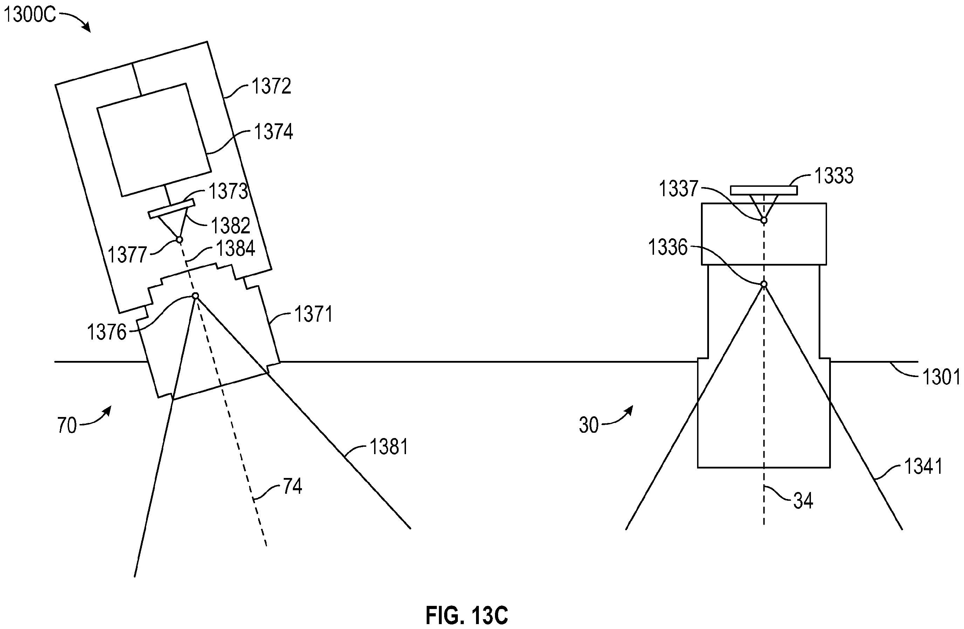

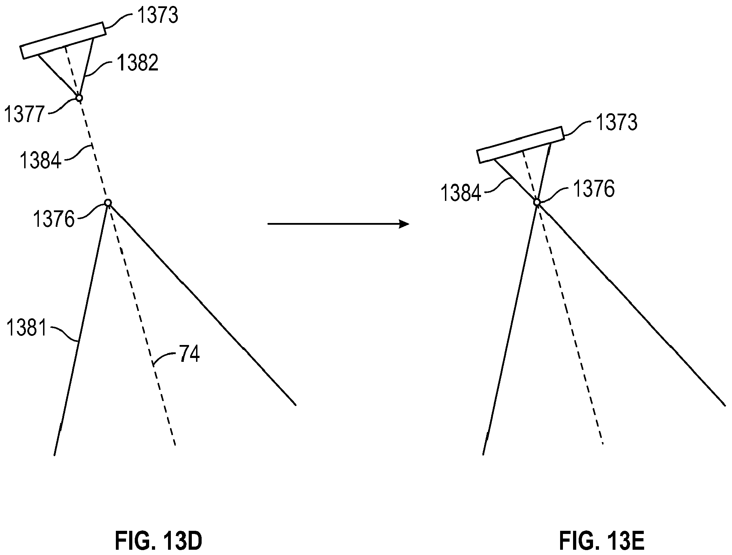

This triangular arrangement provides additional information beyond that available for two cameras and a projector arranged in a straight line as illustrated in FIGs. 1 and 10. The additional information may be understood in reference to FIG. 12A, which explain the concept of epipolar constraints, and FIG. 12B that explains how epipolar constraints are advantageously applied to the triangular arrangement of the 3D imager 1100. In FIG. 12A, a 3D triangulation instrument 1240 includes a device 1 and a device 2 on the left and right sides of FIG. 12A, respectively. Device 1 and device 2 may be two cameras or device 1 and device 2 may be one camera and one projector. Each of the two devices, whether a camera or a projector, has a perspective center, $O_1$ and $O_2$, and a representative plane, 1230 or 1210. The perspective centers are separated by a baseline distance B, which is the length of the line 1202. The concept of perspective center is discussed in more detail in reference to FIGs. 13C, 13D, and 13E. Basically, the perspective

centers $O_1$, $O_2$ are points through which rays of light may be considered to travel, either to or from a point on an object. These rays of light either emerge from an illuminated projector pattern, such as the pattern on illuminated projector pattern generator 912 of FIG. 9, or impinge on a photosensitive array, such as the photosensitive array 922 of FIG. 9. As can be seen in FIG. 9, the lens 914 lies between the illuminated object point 932 and plane of the illuminated object projector pattern generator 912. Likewise, the lens 924 lies between the illuminated object point 932 and the plane of the photosensitive array 922, respectively. However, the pattern of the front surface planes of devices 912 and 922 would be the same if they were moved to appropriate positions opposite the lenses 914 and 924, respectively. This placement of the reference planes 1230, 1210 is applied in FIG. 12A, which shows the reference planes 1230, 1210 between the object point and the perspective centers $O_1$, $O_2$.

In FIG. 12A, for the reference plane 1230 angled toward the perspective center $O_2$ and the reference plane 1210 angled toward the perspective center $O_1$, a line 1202 drawn between the perspective centers $O_1$ and $O_2$ crosses the planes 1230 and 1210 at the epipole points $E_1$, $E_2$, respectively. Consider a point $U_D$ on the plane 1230. If device 1 is a camera, it is known that an object point that produces the point $U_D$ on the image lies on the line 1238. The object point might be, for example, one of the points $V_A$, $V_B$, $V_C$, or $V_D$. These four object points correspond to the points $W_A$, $W_B$, $W_C$, $W_D$, respectively, on the reference plane 1210 of device 2. This is true whether device 2 is a camera or a projector. It is also true that the four points lie on a straight line 1212 in the plane 1210. This line, which is the line of intersection of the reference plane 1210 with the plane of $O_1$-$O_2$-$U_D$, is referred to as the epipolar line 1212. It follows that any epipolar line on the reference plane 1210 passes through the epipole $E_2$. Just as there is an epipolar line on the reference plane of device 2 for any point on the reference plane of device 1, there is also an epipolar line 1234 on the reference plane of device 1 for any point on the reference plane of device 2.

FIG. 12B illustrates the epipolar relationships for a 3D imager 1290 corresponding to 3D imager 1100 of FIG. 11 in which two cameras and one projector are arranged in a triangular pattern. In general, the device 1, device 2, and device 3 may be any combination of cameras and projectors as long as at least one of the devices is a camera. Each of the three devices 1291, 1292, 1293 has a perspective center $O_1$, $O_2$, $O_3$, respectively, and a reference plane 1260, 1270, and 1280, respectively. Each pair of devices has a pair of epipoles. Device 1 and device 2 have epipoles $E_{12}$, $E_{21}$ on the planes 1260, 1270, respectively. Device 1 and device 3 have epipoles $E_{13}$, $E_{31}$, respectively on the planes 1260, 1280, respectively. Device 2 and device 3 have epipoles $E_{23}$, $E_{32}$ on the planes 1270, 1280, respectively. In other words, each reference plane includes two epipoles. The reference plane for device 1 includes epipoles $E_{12}$ and $E_{13}$. The reference plane for device 2 includes epipoles $E_{21}$ and $E_{23}$. The reference plane for device 3 includes epipoles $E_{31}$ and $E_{32}$.

Consider the situation of FIG. 12B in which device 3 is a projector, device 1 is a first camera, and device 2 is a second camera. Suppose that a projection point $P_3$, a first image point $P_1$, and a second image point $P_2$ are obtained in a measurement. These results can be checked for consistency in the following way.

To check the consistency of the image point $P_1$, intersect the plane $P_3$-$E_{31}$-$E_{13}$ with the reference plane 1260 to obtain the epipolar line 1264. Intersect the plane $P_2$-$E_{21}$-$E_{12}$ to obtain the epipolar line 1262. If the image point $P_1$ has been determined consistently, the observed image point $P_1$ will lie on the intersection of the determined epipolar lines 1262 and 1264.

To check the consistency of the image point $P_2$, intersect the plane $P_3$-$E_{32}$-$E_{23}$ with the reference plane 1270 to obtain the epipolar line 1274. Intersect the plane $P_1$-$E_{12}$-$E_{21}$ to obtain the epipolar line 1272. If the image point $P_2$ has been determined consistently, the observed image point $P_2$ will lie on the intersection of the determined epipolar lines 1272 and 1274.

To check the consistency of the projection point $P_3$, intersect the plane $P_2$-$E_{23}$-$E_{32}$ with the reference plane 1280 to obtain the epipolar line 1284. Intersect the plane $P_1$-$E_{13}$-$E_{31}$ to obtain the epipolar line 1282. If the projection point $P_3$ has been determined consistently, the projection point $P_3$ will lie on the intersection of the determined epipolar lines 1282 and 1284. The redundancy of information provided by using a 3D imager 1100 having a triangular arrangement of projector and cameras may be used to reduce measurement time to identify errors and to automatically update compensation/calibration parameters.

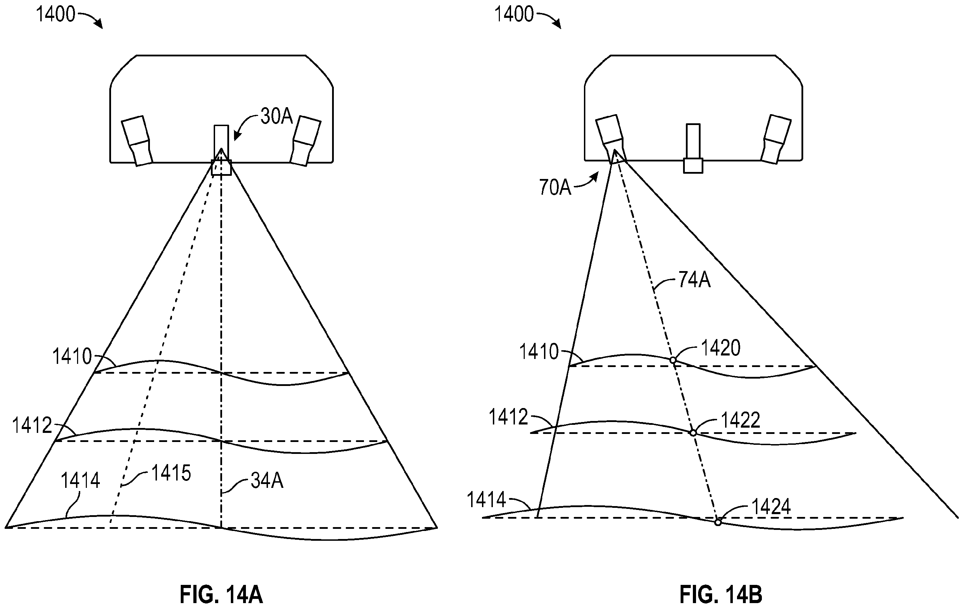

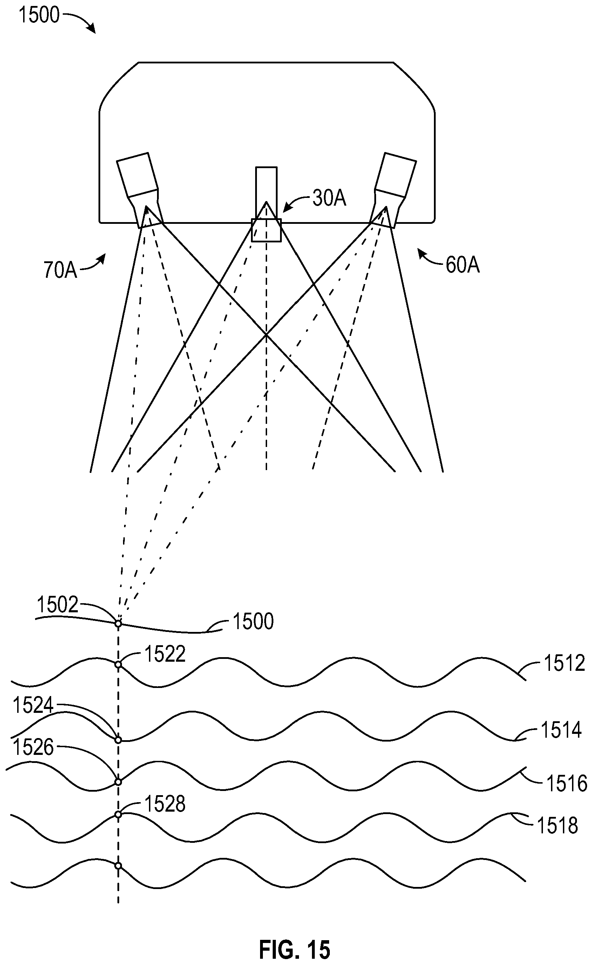

An example is now given of a way to reduce measurement time. As explained herein below in reference to FIGs. 14A-D and FIG. 15, one method of determining 3D coordinates is by performing sequential measurements. An example of such a sequential measurement method described herein below is to project a sinusoidal measurement pattern three or more times to scan a surface of an object, with the phase of the pattern shifted each time. In an embodiment, such projections may be performed first with a coarse sinusoidal pattern, followed by a medium-resolution sinusoidal pattern, followed by a fine sinusoidal pattern. In this instance, the coarse sinusoidal pattern is used to obtain an approximate position of an object point in space. The medium-resolution and fine patterns used to obtain increasingly accurate estimates of the 3D coordinates of the object point in space. In an embodiment, redundant information provided by the triangular arrangement of the 3D imager 1100 eliminates the step of performing a coarse phase measurement. Instead, the information provided on the three reference planes 1260, 1270, and 1280 enables a coarse determination of object point position. One way to make this coarse determination is by iteratively solving for the position of object points based on an optimization procedure. For example, in one such procedure, a sum of squared residual errors is minimized to select the best-guess positions for the object points in space.

The triangular arrangement of 3D imager 1100 may also be used to help identify errors. For example, a projector 1293 in a 3D imager 1290 may project a coded pattern onto an object in a single shot with a first element of the pattern having a projection point $P_3$. The first camera 1291 may associate a first image point $P_1$ on the reference plane 1260 with the first element. The second camera 1292 may associate the first image point $P_2$ on the reference plane 1270 with the first element. The six epipolar lines may be generated from the three points $P_1$, $P_2$, and $P_3$ using the method described herein above. The intersection of the epipolar lines lie on the corresponding points $P_1$, $P_2$, and $P_3$ for the solution to be consistent. If the solution is not consistent, additional measurements of other actions may be advisable.

The triangular arrangement of the 3D imager 1100 may also be used to automatically update compensation/calibration parameters. Compensation parameters are numerical values stored in memory, for example, in the internal electrical system 700 or in another external computing unit. Such parameters may include the relative positions and orientations of the cameras and projector in the 3D imager.

The compensation parameters may relate to lens characteristics such as lens focal length and lens aberrations. They may also relate to changes in environmental conditions such as temperature. Sometimes the term calibration is used in place of the term compensation. Often compensation procedures are performed by the manufacturer to obtain compensation parameters for a 3D imager. In addition, compensation procedures are often performed by a user. User compensation procedures may be performed when there are changes in environmental conditions such as temperature. User compensation procedures may also be performed when projector or camera lenses are changed or after then instrument is subjected to a mechanical shock. Typically, user compensations may include imaging a collection of marks on a calibration plate.

Inconsistencies in results based on epipolar calculations for a 3D imager 1290 may indicate a problem in compensation parameters. In some cases, a pattern of inconsistencies may suggest an automatic correction that can be applied to the compensation parameters. In other cases, the inconsistencies may indicate that user compensation procedures should be performed.

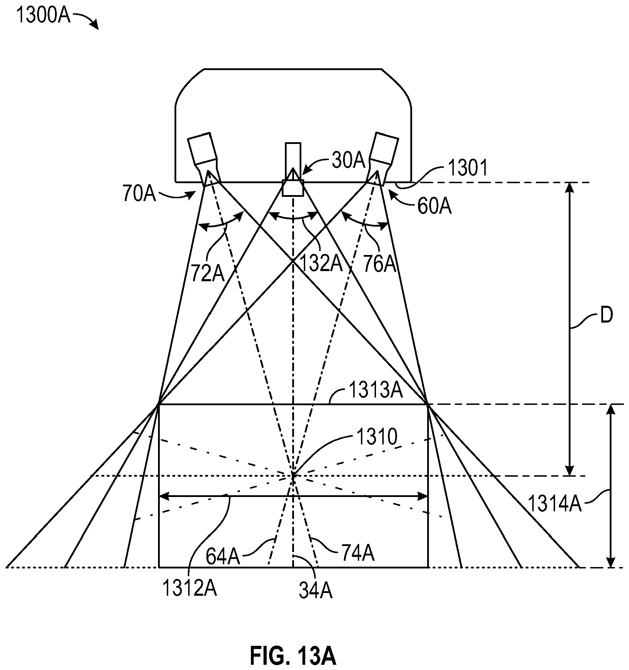

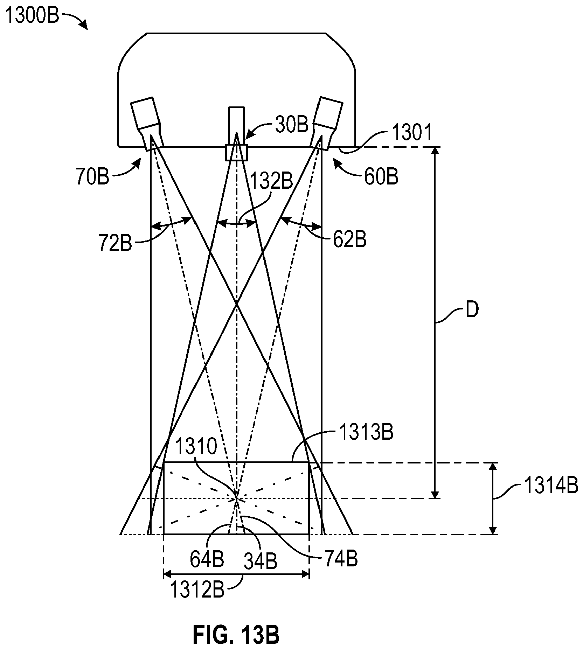

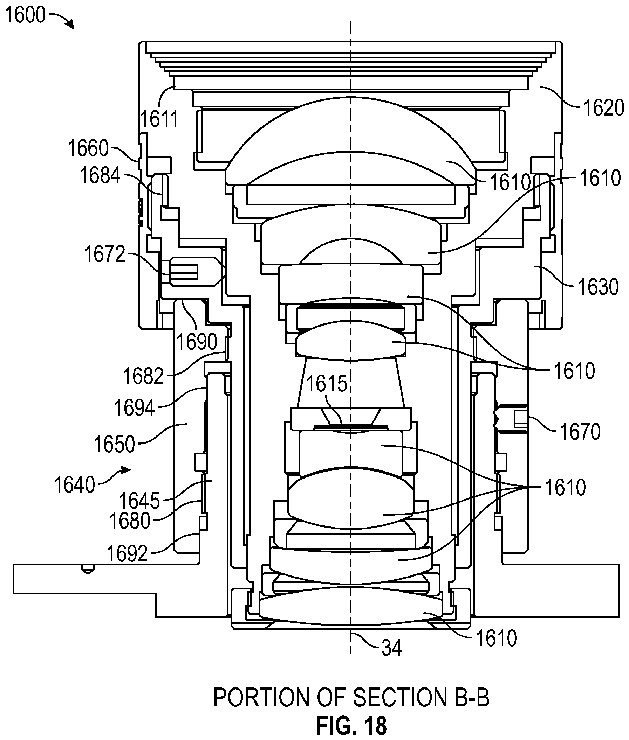

FIGs. 13A and 13B show two versions 1300A and 1300B, respectively, of the 3D imager 10. The 3D imager 1300A includes relatively wide FOV projector and camera lenses, while the 3D imager 1300B includes relatively narrow FOV projector and camera lenses. The FOVs of the wide-FOV cameras 70A, 60A and projector 30A of FIG. 13A are 72A, 62A, and 132A, respectively. The FOVs of the narrow-FOV cameras 70B, 60B and projector 30B of FIG. 13B are 72B, 62B, 132B, respectively. The standoff distance D of the 3D imager 1300A is the distance from the front 1301 of the scanner body to the point of intersection 1310 of the optical axes 74A and 64A of the camera lens assemblies 70A and 70B, respectively, with the optical axis 34A of the projector 30A. In an embodiment, the standoff distance D of the 3D imager 1300B is the same as the standoff distance D of the 3D imager 1300A. This occurs when the optical taxis 74B of the lens assembly 70B is the same as the optical axis 74A of the lens assembly 70A, which is to say that the assemblies 70A and 70B are pointed in the same direction. Similarly, the optical axes 34B and 34A have the same direction, and the optical axes 64A and 64B have the same direction. Because of this, the optical axes of the 3D imagers 1300A and 1300B intersect at the same point 1310. To achieve this result, lens assemblies 30A, 60A, and 70A are designed and constructed to be interchangeable without requiring fitting to each particular frame 10. This enables a user to purchase a lens off the shelf that is compatible with the configuration of imager 1300A, imager 1300B, or other compatible imagers. In addition, in an embodiment, such replacement lenses may be purchased without requiring adjustment of the lens to accommodate variations in the 3D imager. The method of achieving this compatibility is described in more detail herein below in reference to FIGs. 18, 19A-C, 20A-B, and 21A-C.

Because the nominal standoff distance D is the same for 3D imagers 1300A and 1300B, the narrow-FOV camera lenses 60B and 70B have longer focal lengths than the wide-FOV camera lenses 60A and 70A if the photosensitive array is the same size in each case. In addition, as shown in FIGs. 13A and 13B, the width 1312B of the measurement region 1313B is smaller than the width 1312A of the measurement region 1312A. In addition, if the diameters of lens apertures are the same in each case, the depth 1314B (the depth of field (DOF)) of the measurement region 1313B is smaller than the depth 1314A (DOF) of the measurement region 1313A. In an embodiment, 3D imagers 10 are available with different fields of view and different image sensor resolution and size.

FIG. 13C shows a cross-sectional schematic representation 1300C of a camera assembly 70 and a projector 30 according to an embodiment. The camera lens assembly 70 includes a perspective center 1376, which is the center of the lens entrance pupil. The entrance pupil is defined as the optical image of the physical aperture stop as seen through the front of the lens system. The ray that passes through the center of the entrance pupil is referred to as the chief ray, and the angle of the chief ray indicates the angle of an object point as received by the camera. A chief ray may be drawn from each illuminated point on the object through the entrance pupil. For example, the ray 1381 is a chief ray that defines the angle of an object point (on the ray) with respect to the camera lens 1371. This angle is defined with respect to an optical axis 74 of the lens 3171.

The exit pupil is defined as the optical image of the physical aperture stop as seen through the back of the lens system. The point 1377 is the center of the exit pupil. The chief ray travels from the point 1377 to a point on the photosensitive array 1373. In general, the angle of the chief ray as it leaves the exit pupil is different from the angle of the chief ray as it enters the perspective center (the entrance pupil). To simplify analysis, the ray path following the entrance pupil is adjusted to enable the beam to travel in a straight line through the perspective center 1376 to the photosensitive array 1373 as shown in FIGs. 13D and 13E. Three mathematical adjustments are made to accomplish this. First, the position of each imaged point on the photosensitive array is corrected to account for lens aberrations and other systematic error conditions. This may be done by performing compensation measurements of the lenses in the cameras 70, 60 and the projector 30. Such compensation measurement may include, for example, measuring a calibration dot plate in a prescribed arrangement and sequence to obtain aberration coefficients or an aberration map for the lenses. Second, the angle of the ray 1382 is changed to equal the angle of the ray 1381 that passes through the perspective center 1376. The distance from the exit pupil 1377 to the photosensitive array 1373 is adjusted accordingly to place the image points at the aberration-corrected points on the photosensitive array 1373. Third, the point 1377 is collapsed onto the perspective center to remove the space 1384, enabling all rays of light 1381 emerging from the object to pass a straight line through the point 1376 onto the photosensitive array 1373, as shown in FIG. 13E. By this means, the exact path of each beam of light passing through the optical system of the camera 70C may be simplified for rapid mathematical analysis by the electrical circuit and processor 1374 in a mount assembly 1372. In the discussion herein below, the term perspective center is taken to be the center of the entrance pupil with the lens model revised to enable rays to be drawn straight through the perspective center to a camera photosensitive array or straight through the perspective center to direct rays from a projector pattern generator device.

Referring again to FIG. 13C, the projector assembly 3C has a perspective center 1336, a center of an exit pupil 1337, an optical axis 34, and a projector pattern array 1333. As in the camera assembly 70, mathematical corrections are made to enable a ray from light 1341 to travel straight through the perspective center 1336 from the projector pattern plane 1333 to an object. In an embodiment, the projector pattern array 1333 is the DMD 53 shown in FIG. 5A.

An explanation is now given for a known method of determining 3D coordinate on an object surface using a sinusoidal phase-shift method, as described with reference to FIGs. 14A-D and FIG. 15. FIG. 14A illustrates projection of a sinusoidal pattern by the projector 30A. In an embodiment, the sinusoidal pattern in FIG. 14A varies in optical power from completely dark to completely bright. A minimum position on the sine wave in FIG. 14A corresponds to a dark projection and a maximum position on the sine wave corresponds to a bright projection. The projector 30A projects light along rays that travel in constant lines emerging from the perspective center of the projector lens. Hence in FIG. 14A, a line along the optical axis 34A in FIG. 14A represents a point neither at a maximum or minimum of the sinusoidal pattern and hence represents an intermediate brightness level. The relative brightness will be the same for all points lying on a ray projected through the perspective center of the projector lens. So, for example, all points along the ray 1415 are at maximum brightness level of the sinusoidal pattern. A complete sinusoidal pattern occurs along the lines 1410, 1412, and 1414, even though the lines 1410, 1412, and 1414 have different lengths.

In FIG. 14B, a given pixel of a camera 70A may see any of a collection of points that lie along a line drawn from the pixel through the perspective center of the camera lens assembly. The actual point observed by the pixel will depend on the object point intersected by the line. For example, for a pixel aligned to the optical axis 74A of the lens assembly 70A, the pixel may see a point 1420, 1422, or 1424, depending on whether the object lies along the lines of the patterns 1410, 1412, or 1414, respectively. Notice that in this case the position on the sinusoidal pattern is different in each of these three cases. In this example, the point 1420 is brighter than the point 1422, which is brighter than the point 1424.

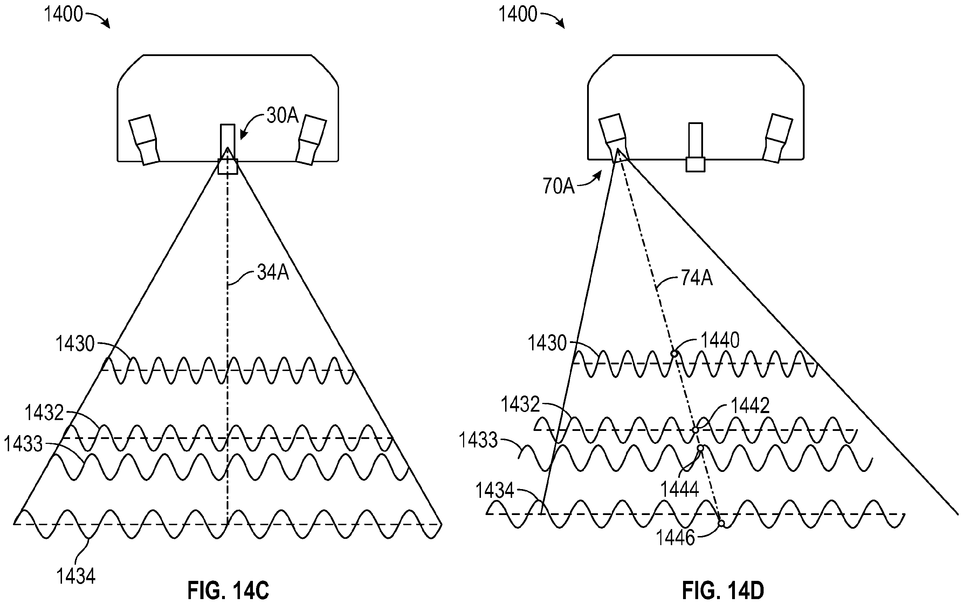

FIG. 14C illustrates projection of a sinusoidal pattern by the projector 30A, but with more cycles of the sinusoidal pattern projected into space. FIG. 14C illustrates the case in which ten sinusoidal cycles are projected rather than one cycle. The cycles 1430, 1433, and 1434 are projected at the same distances from the scanner 1400 as the lines 1410, 1412, and 1414, respectively, in FIG. 14A. In addition, FIG. 14C shows an additional sinusoidal pattern 1433.

In FIG. 14D, a pixel aligned to the optical axis 74A of the lens assembly 70A sees the optical brightness levels corresponding to the positions 1440, 1442, 1444, and 1446 for the four sinusoidal patterns illustrated in FIG. 14D. Notice that the brightness level at a point 1440 is the same as at the point 1444. As an object moves farther away from the scanner 1400, from the point 1440 to the point 1444, it first gets slightly brighter at the peak of the sine wave, and then drops to a lower brightness level at position 1442, before returning to the original relative brightness level at 1444.

In a phase-shift method of determining distance to an object, a sinusoidal pattern is shifted side-to-side in a sequence of at least three phase shifts. For example, consider the situation illustrated in FIG. 15. In this figure, a point 1502 on an object surface 1500 is illuminated by the projector 30A. This point is observed by the camera 70A and the camera 60A. Suppose that the sinusoidal brightness pattern is shifted side-to-side in four steps to obtained shifted patterns 1512, 1514, 1516, and 1518. At the point 1502, each of the cameras 70A and 60A measure the relative brightness level at each of the four shifted patterns. If for example the phases of the sinusoids for the four measured phases are $\theta$ = {160°, 250°, 340°, 70°} for the positions 1522, 1524, 1526, and 1528, respectively, the relative brightness levels measured by the cameras 70A and 60A at these positions are $(1 + \sin(\theta)) / 2$, or 0.671, 0.030, 0.329, and 0.969, respectively. A relatively low brightness level is seen at position 1424, and a relatively high brightness level is seen at the position 1528.

By measuring the amount of light received by the pixels in the cameras 70A and 60A, the initial phase shift of the light pattern 1512 can be determined. As suggested by FIG. 14D, such a phase shift enables determination of a distance from the scanner 1400, at least as long as the observed phases are known to be within a 360 degree phase range, for example, between the positions 1440 and 1444 in FIG. 14D. A quantitative method is known in the art for determining a phase shift by measuring relative brightness values at a point for at least three different phase shifts (side-to-side shifts in the projected sinusoidal pattern). For a collection of $N$ phase shifts of sinusoidal signals resulting in measured relative brightness levels $x_i$, a general expression for the phase $\phi$ is given by $\phi = \tan^{-1}(-b_i/a_i)^{0.5}$, where $a_i = \sum x_j \cos(2\pi j / N)$ and $b_i = \sum x_j \sin(2\pi j / N)$, the summation being taken over integers from j = 0 to $N$ - 1. For some embodiments, simpler formulas may be used. For example, for the embodiment of four measured phases each shifted successively by 90 degrees, the initial phase value is given by $\tan^{-1}((x_4 - x_2) / (x_1 - x_3))$.

The phase shift method of FIG. 15 may be used to determine the phase to within one sine wave period, or 360 degrees. For a case such as in FIG. 14D wherein more than one 360 interval is covered, the procedure may further include projection of a combination of relatively coarse and relatively fine phase periods. For example, in an embodiment, the relatively coarse pattern of FIG. 14A is first projected with at least three phase shifts to determine an approximate distance to the object point corresponding to a particular pixel on the camera 70A. Next the relatively fine pattern of FIG. 14C is projected onto the object with at least three phase shifts, and the phase is determined using the formulas given above. The results of the coarse phase-shift measurements and fine phase-shift measurements are combined to determine a composite phase shift to a point corresponding to a camera pixel. If the geometry of the scanner 1500 is known, this composite phase shift is sufficient to determine the three-dimensional coordinates of the point corresponding to a camera pixel using the methods of triangulation, as discussed herein above with respect to FIG. 9. The term "unwrapped phase" is sometimes used to indicate a total or composite phase shift.

An alternative method of determining 3D coordinates using triangulation methods is by projecting coded patterns. If a coded pattern projected by the projector is recognized by the camera(s), then a correspondence between the projected and imaged points can be made. Because the baseline and two angles are known for this case, the 3D coordinates for the object point can be determined.

An advantage of projecting coded patterns is that 3D coordinates may be obtained from a single projected pattern, thereby enabling rapid measurement, which is desired for example in handheld scanners. One disadvantage of projecting coded patterns is that background light can contaminate measurements, reducing accuracy.

One way to preserve accuracy using the phase-shift method while minimizing measurement time is to use a scanner having a triangular geometry, as in FIG. 11. The three combinations of projector-camera orientation provide redundant information that may be used to eliminate some of the ambiguous intervals. For example, the multiple simultaneous solutions possible for the geometry of FIG. 11 may eliminate the possibility that the object lies in the interval between the positions 1444 and 1446 in FIG. 14D. This knowledge may eliminate a step of performing a preliminary coarse measurement of phase, as illustrated for example in FIG. 14B. An alternative method that may eliminate some coarse phase-shift measurements is to project a coded pattern to get an approximate position of each point on the object surface.

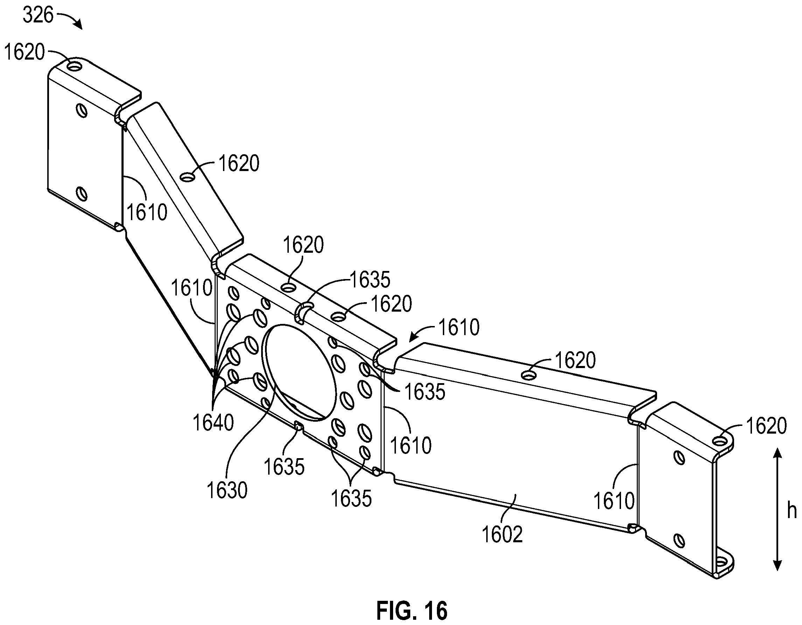

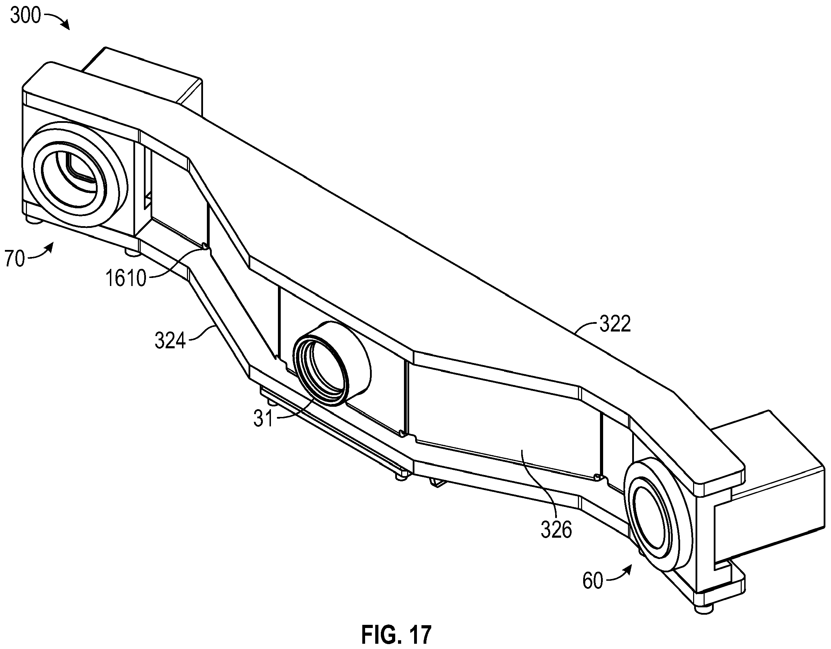

FIG. 16 is a perspective view of a web support 326, which is a part of the support assembly 300 that further includes a top structural support 322 and a bottom structural support 324. In an embodiment, the top and bottom structural supports are made of carbon-fiber composite material that is stiff and has a low coefficient of thermal expansion (CTE). In an embodiment, the web support 326 includes mounting holes 1620 for attaching it to the top structural support 322 and the bottom structural support 324. It includes a hole 1630 through which the projector components pass. In an embodiment, it includes attachment holes 1635 and ventilation holes 1640. In an embodiment, the web support is relatively thin and is configured to bend rather than to cause a change in the distance between camera and projector elements or to otherwise distort the structure. The effect of thermal expansion of the support assembly 300 is shown in a finite element analysis (FEA) model in FIG. 17, in which all of the deformations greatly magnified for clarity. FIG. 17 shows that although the web support 326 distorts in response to changes in temperature, the support structure 300 that holds the cameras 60, 70 and projector 30 changes relatively little.

In an embodiment, the camera lens assemblies 60 and 70 and the projector lens assembly 30 in FIG. 3, shown in cross section in FIG. 18, are configured to be interchangeable with other models of the same type without operator adjustment. In an embodiment, lens assemblies having different FOVs are interchangeable as purchased off-the-shelf and without requiring later adjustment. Designs and manufacturing methods are now described that enable these lens compatibility features.

FIG. 18 shows a portion of section view B-B taken from FIG. 3. FIG. 18 shows a projector lens assembly 1600 and a projector lens mount 1640. The projector lens assembly 1600 includes a collection of lens elements 1610, a lens housing 1620, a lens body 1630, and a lens cover 1660. The collection of lens elements 1610 are affixed within a cavity in the lens housing 1620 using methods well known in the art. A physical aperture stop 1615 is included within the collection of lens elements 1610. Chief rays from object points pass through the center of the physical aperture stop 1615 and also through the center of the entrance pupil, which is the aperture stop 1615 as seen from the front of the lens assembly. A window 1611 may be placed near the front of the lens assembly. The lens housing 1620 is placed inside the lens body 1630. Adjustment of the lens housing 1620 relative to the lens body 1630 is made using lens adjustment screw threads 1684. The lens body 1630 is firmly affixed to the lens housing 1620 with lens housing set screws 1672. In an embodiment, three lens housing set screws 1672 are spaced apart by 120 degrees. The cosmetic lens cover 1660 is affixed over a portion of the lens body 1630.

The projector lens mount 1640 includes a projector adjustment ring 1650 and a projector base 1645. Adjustment of the projector adjustment ring 1650 relative to the projector base 1645 is made using mount adjustment screw threads 1680. The projector adjustment ring 1650 is firmly affixed to the projector base 1645 with base set screws 1670. In an embodiment, three base set screws 1670 are spaced apart by 120 degrees. To ensure that the projector adjustment ring 1650 is accurately centered on the projector base 1645, a first pilot diameter 1692 and a second pilot diameter 1694 are provided for the projector adjustment ring 1650 and the projector base 1645. At the locations of the first pilot diameter 1692 and the second pilot diameter 1694, the tolerances on the inner and outer diameters of the projector adjustment ring 1650 and the projector base 1645 are relatively tight.

To ensure compatibility of projector lens assemblies 1600 and projector mounts 1640 for all manufactured lenses and scanners, golden projector lens assemblies and golden projector mounts are created in an initial stage and used thereafter in manufacturing.

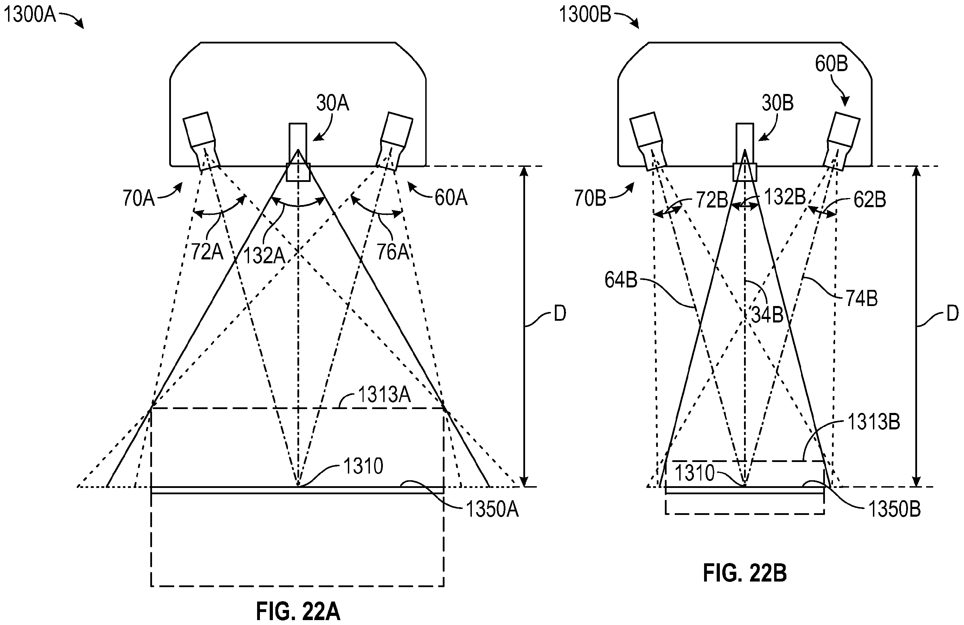

To obtain a golden projector lens assembly and a golden projector mount in an initial stage, a projector lens assembly 1600 and a projector mount 1640 are assembled in a 3D imager 10. As shown in FIGs. 22A and 22B, an observation surface plane 1350A or 1350B is placed at a preferred standoff distance D from the 3D imager 10. The mount adjustment screw threads 1680 and lens adjustment screw threads 1684 are adjusted to project from the projector a sharp image onto the observation surface plane. The determination of whether the projector is projecting a sharp pattern may be determined from observation by one of the cameras 60, 70 on the 3D imager 10 or by an external camera. The projector lens housing set screws 1672 are tightened to fix the position of the projector lens housing 1620 to the projector lens body 1630, and the base set screws 1670 are tightened to fix the position of the projector adjustment ring 1650 to the projector base 1645. With these adjustments made, the relative position of the projector lens elements 1610 are fixed in relation to the front projecting surface of the DMD 53. When the projector lens assembly 1600 is removed from the scanner and reinserted at a later time, contact is made at the working flange 1690, which ensures that repeatability in the position of the projector lens assembly 1600 relative to the projector mount 1640. This ensures that the projected images remain sharp upon multiple removals and reinsertions of the projector lens assembly 1600. Note that this initial step, in which both the projector mount 1640 and the lens assembly 1600 are both adjusted, may only be carried out once - either with a narrow-FOV projector lens assembly or with a wide-FOV projector lens assembly. Thereafter, the golden projector mount has been obtained and may be used to obtain other wide-FOV and narrow-FOV projector lens assemblies.

Completing the initial stage as described in the previous paragraph results in creation of a golden projector lens assembly and a golden projector mount. If both wide-FOV and narrow-FOV lens assemblies are available, the initial step results in a both wide-FOV and narrow-FOV golden projector lens assemblies. Thereafter, the golden projector lens assembly is used in routine manufacturing to create a plurality of projector mounts, and the golden projector mount is used in routine manufacturing to create a plurality of projector lens assemblies.

To create a plurality of projector mounts 1640 in a routine manufacturing process, a golden projector lens assembly 1600 is placed on the projector mount 1640 of a production unit. An observation surface plane 1350A or 1350B is placed at the standoff distance D from the 3D imager 1300A or 1300B, respectively, as shown in FIG. 22A and FIG. 22B. Either the wide-FOV projector lens assembly in projector 30A or the narrow-FOV projector lens assembly in projector 30B may be used in this step. A pattern is projected from the DMD 53 through the golden projector lens assembly onto the observation surface plane. The mount adjustment screw threads 1680 are adjusted to produce a sharp (in-focus) pattern on the observation surface plane. The determination of whether the projector is projecting a sharp pattern may be determined from observation by one of the cameras on the 3D imager 10 or by an external camera. The base set screws 1670 are tightened to fix the position of the projector adjustment ring 1650 to the projector base 1645.

To create a plurality of projector lens assemblies 1600 in a routine manufacturing process, a golden projector mount 1640 in a 3D imager attaches to a production projector lens assembly 1600. An observation surface plane 1350A or 1350B is placed at the standoff distance D from the 3D imager. A pattern is projected from the DMD 53 onto the observation surface plane 1350A or 1350B. The lens adjustment screw threads 1684 are adjusted to project from the projector 30 a sharp image onto the observation surface plane 1350A or 1350B. The determination of whether the projector is projecting a sharp pattern may be determined from observation by one of the cameras on the 3D imager 10 or by an external camera. The lens housing set screws 1672 are tightened to fix the position of the lens housing 1620 to the lens body 1630.

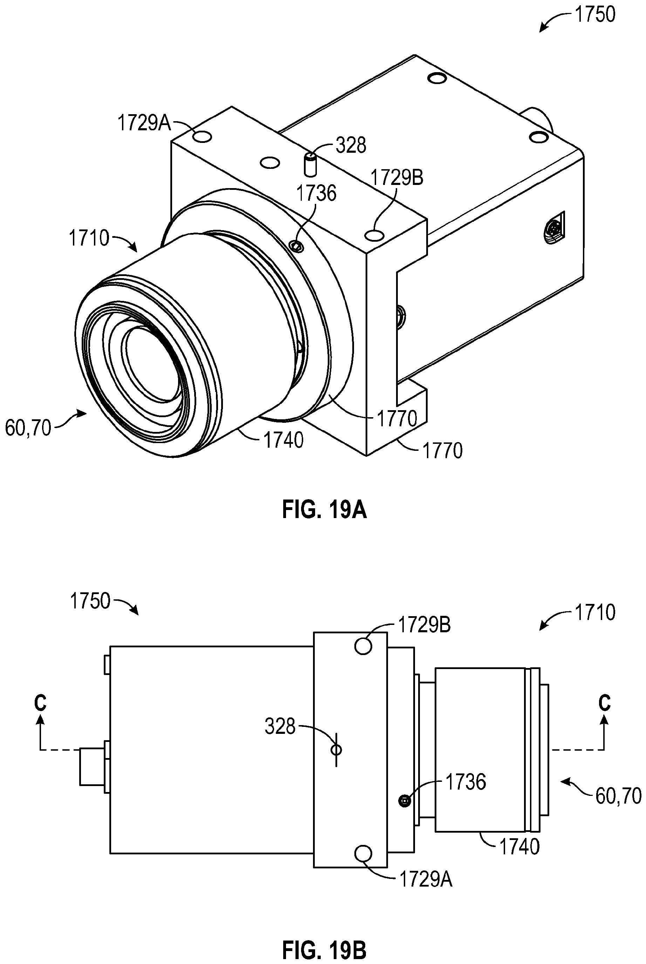

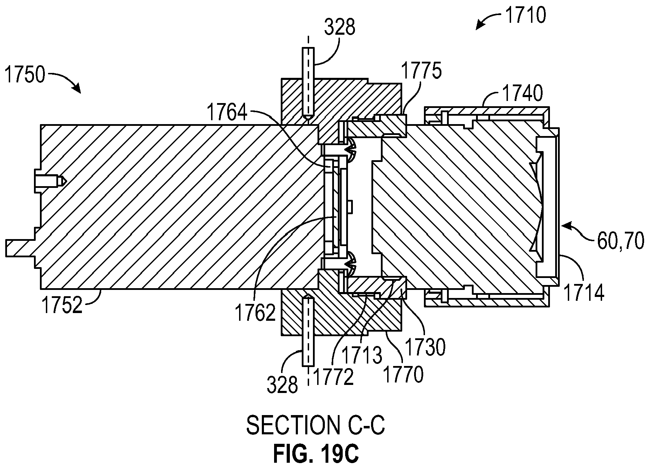

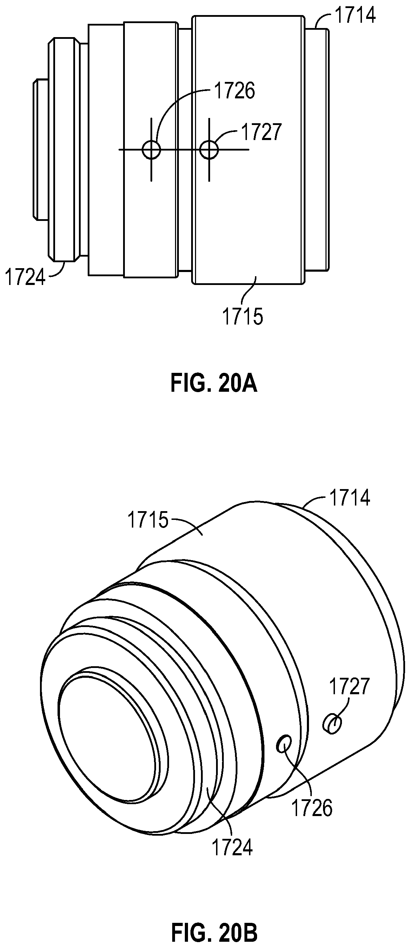

FIGs. 19A and 19B are perspective and top views, respectively, of a camera 60 or 70 that includes a camera lens assembly 1710 and a camera mount 1750. FIG. 19C is a view of cross section C-C taken through the top view. Additional features of the camera lens assembly 1710 are shown in FIGs. 20A and 20B. In an embodiment, the cameras 60 and 70 use the same design for the camera lens assembly 1710 and camera mount 1750.

The camera lens assembly 1710 includes a camera cover 1740, lens mounting threads 1713, a camera lens focus adjustment ring 1715, a focus set screw 1727, an aperture set screw 1726, and a filter mount 1714. The camera lens assembly 1710 also includes a collection of lens elements internal to the camera lens assembly 1710 but not visible in the figures. In an embodiment, the camera may be a commercially purchased lens modified as described herein below. The lens focus adjustment ring 1715 is adjusted for each separate camera lens assembly 1710 to achieve a desired focal length. The focus set screw 1727 holds the focal length to a fixed value. The aperture set screw 1726 holds the aperture at a fixed value. An optional filter may be held in place by the filter mount 1714. The lens mounting threads 1713 are used to attach the camera lens assembly 1710 to the camera mount 1750. The engagement of the lens mounting threads 1713 is limited by the working flange 1730, as discussed further herein below. After the lens focal length and aperture size are fixed, a camera cover 1740 is placed over the rest of the camera lens assembly 1710. In an embodiment, epoxy or glue is placed between the camera lens focus adjustment ring 1715 and the camera cover 1740 to more strongly fix the set screws in place.

The camera mount 1750 includes an electrical enclosure 1752, a mount bracket 1770, a camera mount adjustment ring 1775, a pair of pins 328, an optical bandpass filter 1762, and a gasket dust seal 1764. Adjustment of the camera mount adjustment ring 1775 relative to the mount bracket 1770 is made using camera mount adjustment screw threads 1772. The camera mount adjustment ring 1775 is firmly affixed to the mount bracket 1770 with bracket set screws 1736. In an embodiment, three bracket set screws 1736 are spaced apart by 120 degrees. The electronics enclosure holds a photosensitive array and camera processing electronics. Although FIG. 19 does not show the photosensitive array or camera processing electronics within the electronic enclosure, the photosensitive array and camera processing electronics are shown in FIG. 13C by reference numbers 1373 and 1374, respectively. The mount bracket 1770 is attached to the top structural support 322 and the bottom structural support 324 with the pair of pins 328, as shown in FIGs. 3, 19A, and 19C. The pins fit tightly enough into pin holes to ensure a consistent distance between the cameras and the projector but loosely enough to permit rotation of the cameras 60, 70 about the respective pin axes. This enables the cameras to be pointed to the desired intersection point 1310 shown in FIGs. 13A and 13B. After the cameras are rotated to the desired orientation, they are locked into place with the screws 329A and 329B (FIG. 3) put through holes in the top structural support 322 and into threaded holes 1729A and 1729B, respectively. The optical bandpass filter passes light at the wavelength of the light source 37 and blocks other wavelengths from background lights. The gasket dust seal helps to ensure a dust-free environment within the electrical enclosure 1752.

To ensure compatibility of camera lens assemblies 1710 and camera mounts 1750 for all manufactured lenses and scanners, golden camera lens assemblies and golden camera mounts are created in an initial stage and used thereafter in manufacturing.

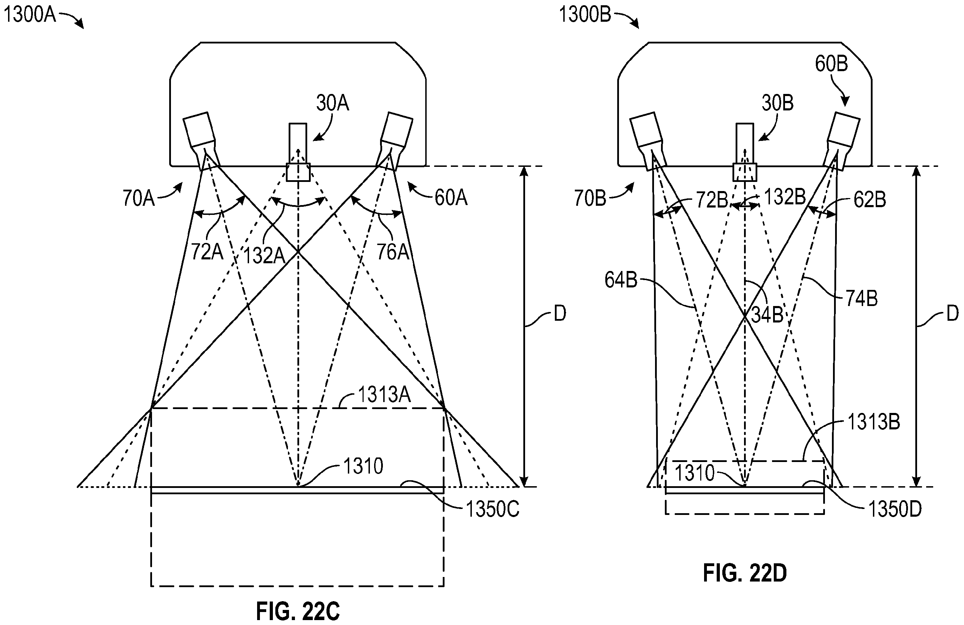

To obtain a golden camera lens assembly and a golden camera mount in an initial stage, a camera lens assembly 1710 and a camera mount 1750 are assembled in a 3D imager 10. As shown in FIGs. 22C and 22D, an observation surface plane 1350C (for a camera 60A, 70A) or 1350D (for a camera 60B, 70B) is placed at a preferred standoff distance D from the 3D imager 10. The observation surface planes 1350C, 1350D include a pattern on the surface. The pattern may be permanently marked on the surface, projected by the projector 30A or 30B, or projected onto marks on the surface. In the latter case, a pattern of light might be projected onto a collection of white reflective dots on an observation surface plane, for example. The camera mount adjustment screw threads 1772 and the camera lens focus adjustment ring 1715 are adjusted to obtain a sharp (focused) image of the pattern on the surface plane 1350C, 1350D on the photosensitive array of the camera. The bracket set screws 1736 are tightened to fix the position of the camera mount adjustment ring 1775 to the mount bracket 1770, and the focus set screw 1727 is tightened to fix the camera lens focus adjustment ring 1715 in place. With these adjustments made, the camera lens assembly 1710 is fixed in relation to the photosensitive array within the electrical enclosure 1752. When the camera lens assembly 1710 is removed from the scanner and reinserted, contact is made at the working flange 1730, which ensures that repeatability in the position of the camera lens assembly 1710 relative to the camera mount 1750. This ensures that the captured images remain sharp and in focus upon multiple removals and reinsertions of the camera lens assembly 1710. Note that this initial step, in which both the camera mount 1750 and the camera lens assembly 1710 are both adjusted, may only be carried out once - either with a narrow-FOV camera 60B, 70B or with a wide-FOV camera 60A, 70A. Thereafter, the golden camera mount 1750 has been obtained and may be used to obtain both wide-FOV and narrow-FOV camera lens assemblies.

Completing the initial stage as described in the previous paragraph results in creation of a golden camera lens assembly and a golden camera mount. If both wide-FOV and narrow-FOV lens assemblies are available, the initial step results in a both wide-FOV and narrow-FOV golden camera lens assemblies. Thereafter, the golden camera lens assembly is used in routine manufacturing to create a plurality of camera mounts, and the golden camera mounts are used in routine manufacturing to create a plurality of camera lens assemblies.

To create a plurality of camera mounts 1750 in a routine manufacturing process, a golden camera lens assembly 1710 is placed on the projector mount 1750 of a production unit. An observation surface plane 1350C (for wide-FOV cameras 60A, 70A) or 1350D (for narrow-FOV cameras 60B, 70B) is placed at the standoff distance D from the 3D imager 1300A or 1300B, respectively, as shown in FIG. 22C and FIG. 22D. The camera mount adjustment screw threads 1772 are adjusted to produce a sharp (in-focus) image of the pattern on the observation surface plane. The bracket set screws 1736 are tightened to fix the position of the camera mount adjustment ring 1775 to the mount bracket 1770.

To create a plurality of camera lens assemblies 1710 in a routine manufacturing process, a golden camera mount 1750 in a 3D imager attaches to a production camera lens assembly 1710. An observation surface plane 1350C (for wide-FOV cameras 60A, 70A) or 1350D (for narrow-FOV cameras 60B, 70B) is placed at the standoff distance D from the 3D imager. The focus adjustment ring 1715 is adjusted to obtain a sharp image of the pattern on the observation surface plane 1350C or 1350D. The focus set screw 1727 is tightened to fix the camera lens focus adjustment ring 1715 in place.

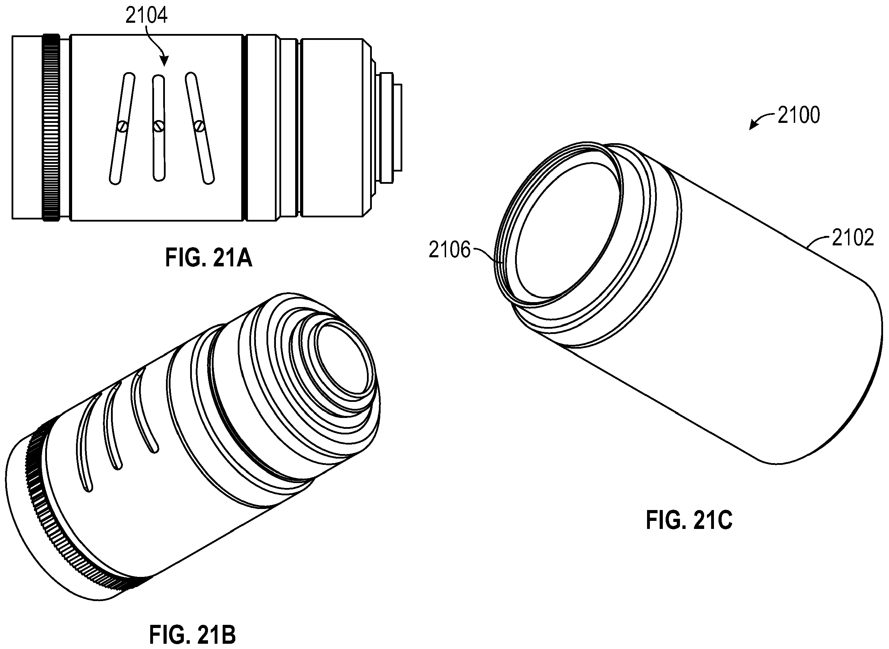

FIGs. 21A, 21B, and 21C are a top view, a first perspective view, and a second perspective view, respectively, of a camera lens assembly 2100 having a relatively long focal length. When the lens cover 2102 is removed, the focusing mechanism 2104 is revealed. In this instance, the focusing mechanism 2104 sets three adjustment screws, which are configured to turn together. To ensure that the three adjustment controls are firmly locked into position, a layer of epoxy or other glue may be placed within the lens cover 2012 over the adjustment controls 2104. The front of the lens assembly is indicated by the presence of a mount for an optional filter.

Scanning a surface of an object using a sequential measurement method described in to FIGs. 14A-D and FIG. 15 to conduct multiples scans of a surface of the object in order to generate scan data can be problematic because the scans need to be registered/transferred into a single coordinate system, which requires additional hardware and software. Moreover, the described methods are typically semi-automated and therefore utilize manual surface featuring (e.g., putting targets on an object), which is time consuming, contaminating the surface and/or utilize an external tracking system, which is expensive. Accordingly, providing a system and method for orienting images into one coordinate system and automatically registering scan data into a unique coordinate system, as disclosed herein, would be beneficial.

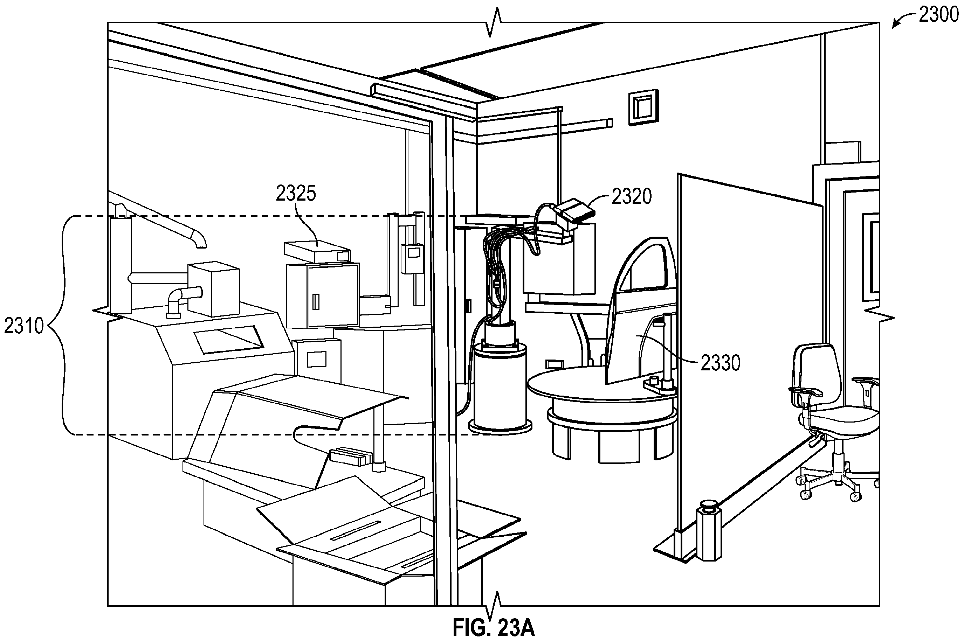

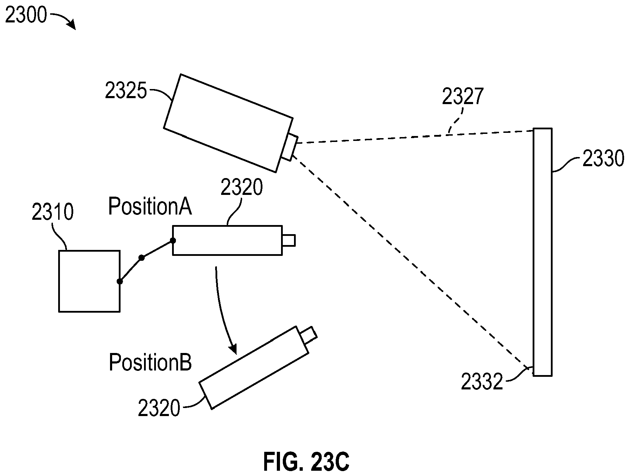

FIG. 23A and FIG. 23C illustrate a system 2300 for orienting images of an object into one coordinate system and automatically registering scan data associated with the object into a unique coordinate system. The system 2300 includes a mover 2310, an external projector 2325 and a 3D imager 2320, i.e., scanner. In an embodiment, an object 2330 is an automobile door. The mover 2310 can provide movement over five degrees of freedom, but a robot or other mover having more or fewer degrees of freedom of movement may be utilized.

The 3D imager 2320 includes, one or more cameras (not shown), and a processor (not shown) and may be the same, like, or different from those of 3D imagers described herein in earlier figures, such as 3D imager 10 for example. The external projector 2325 can be placed at a fixed location in relation to the object 2330. The external projector 2325 can project a random pattern 2327 on a surface 2332 of the object 2330 from the fixed location. The external projector 2325 can be non-calibrated, less sophisticated and lower costly than projectors that are used in implementations described herein above with respect to earlier figures.

The type of projected pattern 2327 projected by the external projector 2325 may be a single projected pattern or a projection of a series of patterns. The single projected pattern or the series of patterns can be for example, blue in color (e.g., the light source of the projector emits light in the 400 - 495 nm wavelength). Utilizing the color blue provides improved contrast for perception by certain 3D imagers, for example, a FARO cobalt system.3D imager. The single projected pattern or a projection of a series of patterns can utilize key points (i.e., unique points, which can be localized with high accuracy in a number of images) for a bundle-adjustment calculation.

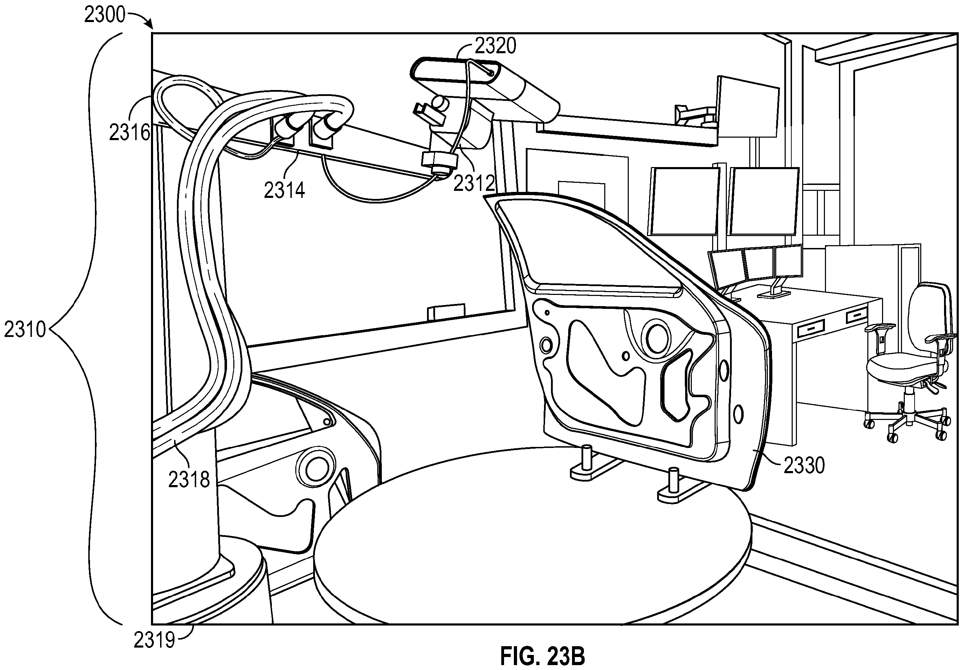

FIG. 23B further illustrates the system 2300 for orienting images of an object into one coordinate system and therefore automatically registering scan data associated with the object into a single coordinate system. In an embodiment, the mover 2310 is a robot that includes a robot end effector (not shown), a wrist mechanism 2312, a forearm mechanism 2314, an upper-arm mechanism 2316, a rotation stage 2318, and a base 2319. The 3D imager 2320 can be moved to various positions via mover 2310. The 3D imager 2320 can record a 3D frame without an externally projected pattern from the external projector 2325 and a 2D image or pair of 2D images with an externally projected pattern from the external projector 2325.

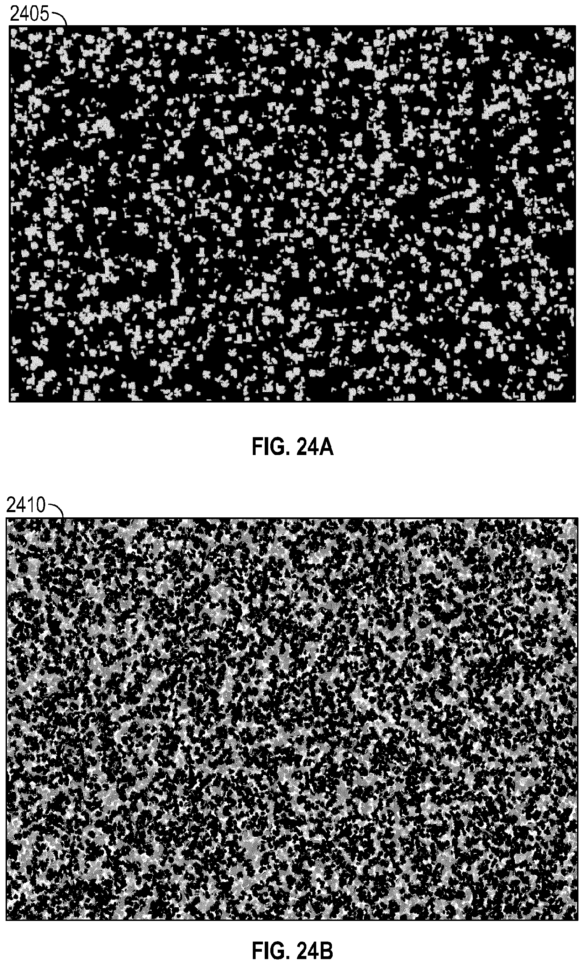

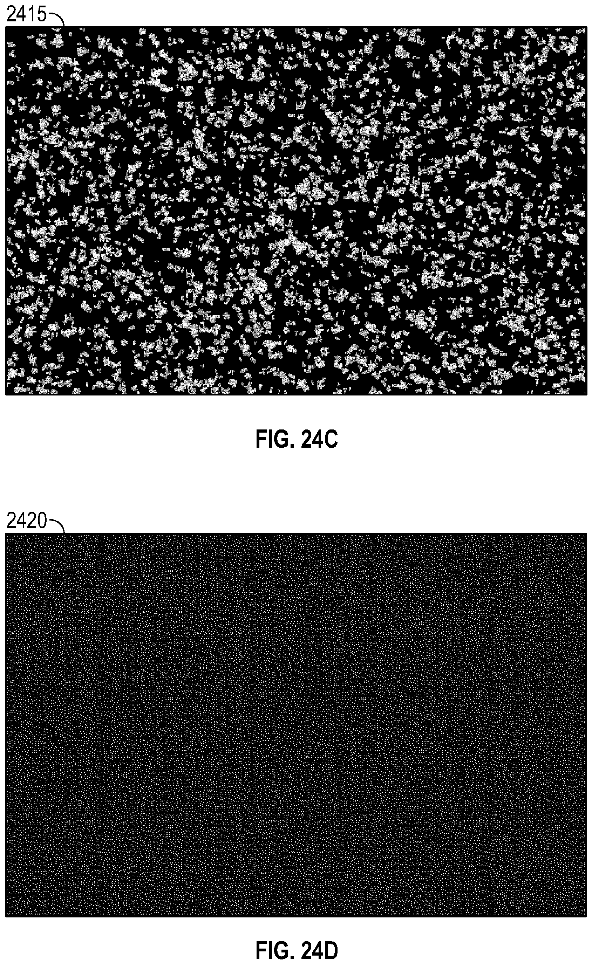

FIGs. 24A, 24B, 24C and 24D illustrate some random patterns that can be used when a projector projects a single projected pattern. In FIG. 24A, pattern 2405 can be a pattern having random binary blobs in which a pixel is either 'on' or 'off'. The pattern 2405 is created from a random placement of pre-defined shapes (random in position, orientation, size and number) in the pattern 2405. In FIG. 24B, pattern2410 can be a pattern having complex 2D shapes with multiple unique structures. The pattern 2410 is not binary, i.e., the pixels have a non-zero value that is distributed over a range of gray values. The pattern 2410 is created from several sets of individual randomly placed pixels. A map of distances between these pixels is used to generate pattern 2410.

In FIG. 24C, pattern 2415 is a pattern similar to pattern 2405; however, the blobs of pattern 2415 are not binary, but are non-zero pixels having different gray values. Pattern 2415 is created using as a combination from a shape pattern like that of pattern 2405 and employs the different gray values for the shapes utilized in pattern 2410. For pattern 2415, a range of intensity/gray values for non-zero pixels does not need to span a full range but can be limited to higher intensity values, e.g., 60% → 100%, or 80% → 100%, in order to ensure a high contrast.

Patterns 2405, 2410 and 2415 can be used with an algorithm that extracts position and a description of certain features based on a set of pixel values. Some commonly known feature extractor include but are not limited to KAZE, AKAZE, SIFT, SURF, ORB, BRIEF or BRISK, for example. The description of the set of pixel values can be compared and matched between different images even under perspective distortion. The matching of the feature descriptors is done by nearest neighbor search for example, a FLANN library can be used.

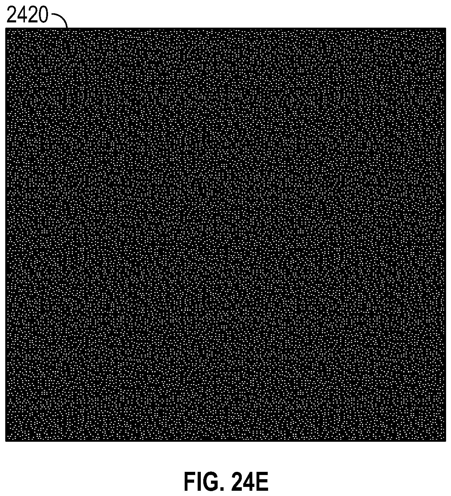

In FIG. 24D, pattern 2420 is created using a predetermined number of dots to form a specific pseudo-random pattern that can be identified in a single image even under some distortion. Pattern 2420 enables an algorithm to give each dot an individual tag thereby allowing each dot to be easily matched between different images. FIG. 24E is an enlarged portion of pattern 2420.

The single projected pattern or series of patterns can be based on geometries in different orientations and sizes. The single projected pattern or series of patterns can be generated using geometric seeds. For example, a pattern can include six different initial shapes ranging from 10x10 to 25x25 pixels. In an embodiment, the shapes consist of asymmetric crosses or multi crosses. For each geometrical seed, an image of the number of images can be calculated and some pixels of the pattern can be set to '1' randomly. The number of pixels set to '1' can be chosen so that all initial chosen pixels have a certain percentage of an overall pixel count. In an embodiment, 0.15% of all pixels of the image (1200x1920) are set to "1".

The image can be dilated using a square kernel with a random size. In an embodiment, the dilation kernel is a fixed size. In another embodiment, the dilation kernel has a size between 2 and 6 pixels. The image can be further dilated using the previously generated geometrical seed. In an embodiment, for each image, the geometrical seed is rotated by an angle. In an embodiment, the rotation angle is an arbitrary angle. Values for the images can be summed, and overlapping areas with the summed images can be set to '0' to increase pattern randomness.

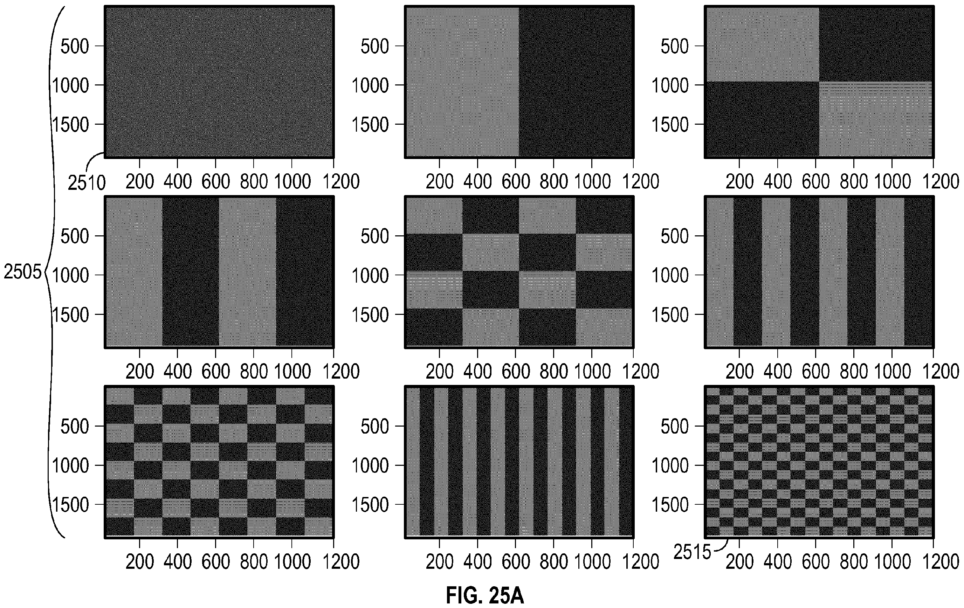

FIGs. 25A-25C each illustrates a pattern series for use when a projector is projecting a series of patterns. In FIGs. 25A-25C, a series of multiple patterns may be projected and recorded sequentially. In a post-processing stage, features detected in an image for a single pattern may be combined with the features detected in images for the other patterns in the series.

Detecting features using a pattern series increases a number of points, which can be localized with high accuracy and be used for an alignment of the images. Accuracy can be further increased by using a defined temporal code which can identify a number of pixels.

FIG. 25A illustrates a pattern series 2505. Pattern series 2505 starts with a full image 2510. Sub-images are created based on the full image 2510 to complete the pattern series 2505. Accordingly, pattern series 2505 contains a full image 2510 and 8 sub-images. The 8 sub-images can be used to generate a code for each subsections of the pattern series 2505 (i.e., 16x16=256). The pattern series 2505 can additionally include a full bright/white pattern and a full black pattern. The full bright/white pattern and the full black pattern can be used to find the thresholds for 'on' or 'off' states for each pixel. For example, pixels which belong to the bottom right pattern 2515 have a binary address of '01010101'. Furthermore, gray-code can be used to generate an image. The full image 2510 and each sub-image can also be assigned a binary address. Pattern series 2505 can be used to fix on a location of a connected area of pixels.

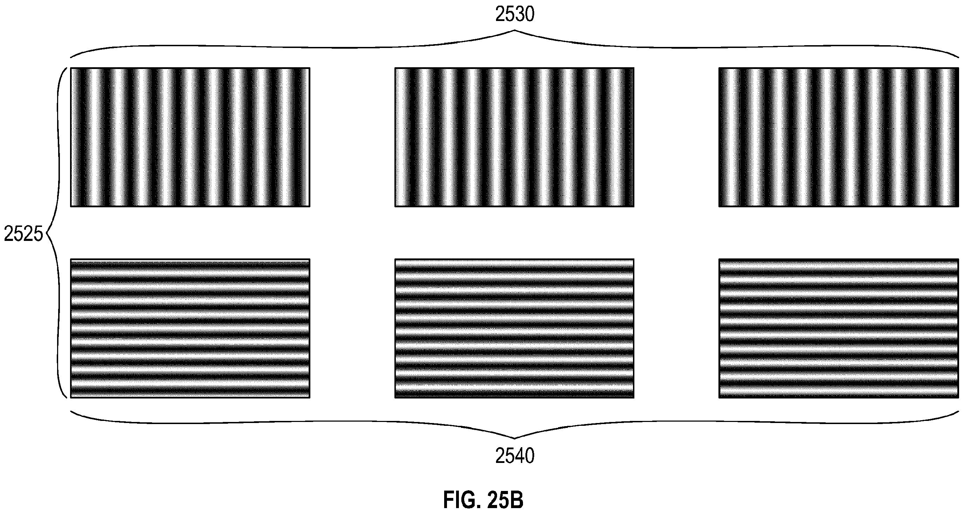

FIG. 25B illustrates a pattern series 2525. Pattern series 2525 reflects the desire to assign a single address to each pixel of an image. A projector use herein can output 1920x1200 pixels per image; however, projectors having different pixel outputs can also be employed. Hence, 22 patterns would be required to address each pixel, which is both compute and space intensive. In order to reduce the computational burden, as well as reduce the number of patterns used and increase accuracy, pattern series 2525 uses patterns having continuous functions. The pattern series 2525 can be used to address a single pixel in a sub-pattern, which are uniquely addressed by binary coding.

Pattern series 2525 can utilize cosine patterns. Each pattern of pattern series 2525 can be generated using a cosine-squared amplitude distribution. A period of the cosine function equals double of a size of one sub-pattern of the pattern series 2505 (FIG. 25A) thereby causing a single period of the cosine-squared function to fall into a single sub-pattern of the pattern series 2505 or 2515 if an individually addressed sub-pattern is referenced. For two subsequent images, the pattern series 2525 can be shifted spatially by a known phase in order for an exact position in the cosine pattern to be extracted for each individual pixel in a manner, for example, described in paragraph [0088]. The three images of a first row 2530 or a second row 2540 can therefore be used to obtain a Phase(Position), Offset, and Amplitude for each individual pixel. The Phase(Position), Offset, and Amplitude can be used to resolve the position for each individual pixel.

In pattern series 2525, the first row of patterns 2530 can be used to resolve a position along an x-axis for each individual pixel. The second row of patterns 2540 can be used to resolve a position along a y-axis for each individual pixel.

Pattern series 2525 can be rotated 90° and the calculations repeated. The rotated pattern series 2525 can be used to obtain 2D position information. Pattern series 2525 can utilize more images having phase shifts than those illustrated in FIG. 25B in order to increase accuracy.

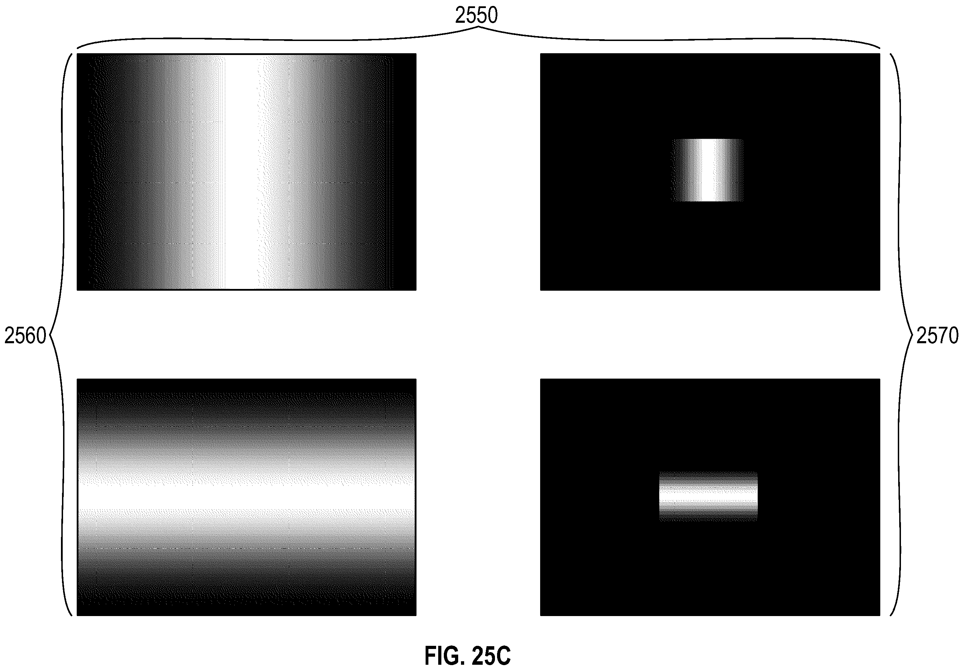

FIG. 25C illustrates pattern series 2550. The displayed pattern illustrated in Fig 25C shows an optional addition to the pattern series 2525. Instead of filling a complete sub-pattern (like 2515) with a continuous pattern as shown in the left column 2560, a cosine pattern with increased spatial frequency and a masked part can be use as shown in the right column 2570. To avoid ambiguity, the mask is used to mask out a portion of the sub-pattern and effectively use a smaller patch. While a series of cosine-patterns are still projected, an associated period is smaller than a single patch which improves the accuracy pixel address to sub-pixel values. For example, one or more points related to a center of one or more sub-images which are identified in the first phase of the pattern projection.

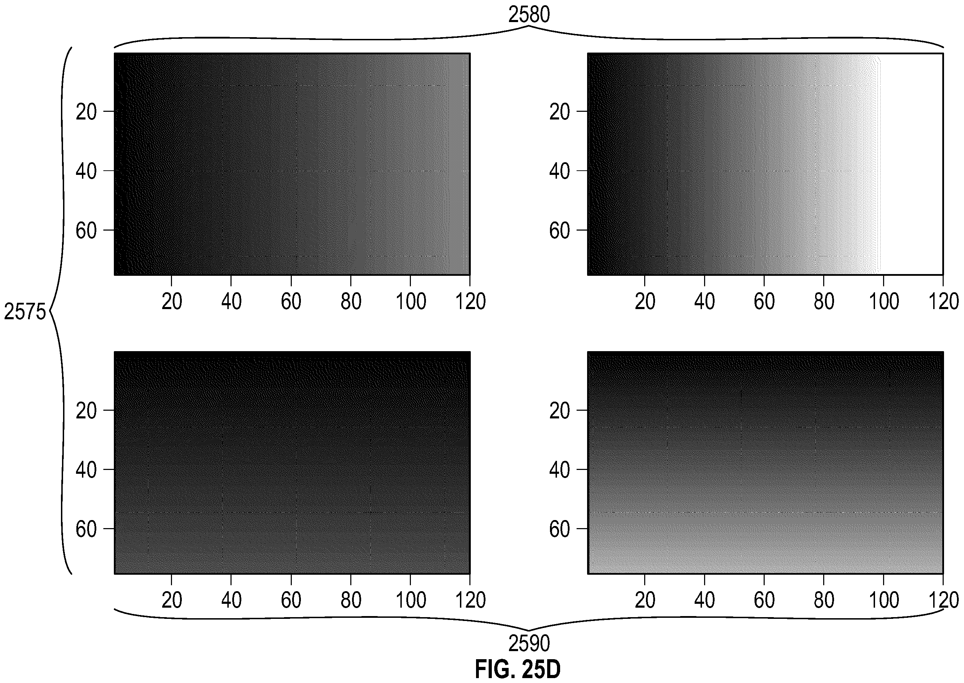

FIG. 25D illustrates a pattern series 2575. Intensity slopes may be projected over a full patch (as illustrated) or over a portion of the patch. A projected intensity for each pixel in a top row 2580 of pattern series 2575 can be described by equation:

$$I_k = Q_1 + M_1(x)\, k$$

where 'k' is an identifier which could be 1 and 2 for the first or second image in a top row 2580 of pattern series 2575. Values can be selected in order to allow for a bigger difference between the images.

For a bottom row 2590 of pattern series 2575 can be described by equation:

$$I_k = Q_2 + M_2(y)\, k$$

A function which defines the slope can be implemented in different versions. For example, a linear equation with an offset:

$$M(x) = offset + slope\, x$$

Other functions can be used in place of the described function, e.g., squared dependence of x. Additionally, the parameters 'offset' and 'slope' may be equal for M1 and M2.

However, constant offset values Q1 and Q2 should be different values. A selection of absolute values can be made in such a way that there can be a measurable difference between adjacent pixels (i.e., adjacent values of x). While some pixel saturation is tolerable since an identification of each pixel is not needed, the selected absolute values should not be too large in order to avoid excessive pixel saturation.

During a measurement, each pixel of a camera can record an intensity according to the equation:

$$V_k = O + A I_k$$

where 'O' is a constant offset for each pixel and 'A' is a constant response.

An algebraic solution can be found to solve for the unknown variables (O, A, M1, M2) for each pixel, as indicated:

$$M_1 = \frac{(Q_2 - Q_1)(V_{x1} - V_{x2})}{k_2\, V_{x1} - k_1 V_{x2} - k_2 V_{y1} + k_1 V_{y2}}$$

$$M_2 = \frac{(Q_2 - Q_1)(V_{y1} - V_{y2})}{k_2\, V_{x1} - k_1 V_{x2} - k_2 V_{y1} + k_1 V_{y2}}$$

$$A = \frac{k_2\, V_{x1} - k_1 V_{x2} - k_2 V_{y1} + k_1 V_{y2}}{(k_1 - k_2)(Q_2 - Q_1)}$$

$$O = -\frac{k_2 Q_2\, V_{x1} - k_1\, Q_2\, V_{x2} - k_2 Q_1 V_{y1} + k_1 Q_1\, V_{y2}}{(k_1 - k_2)(Q_2 - Q_1)}$$

where Vx1 is a measured intensity in a first frame of a pattern with a slope along an x-direction, and Vy2 is a measured intensity in a second frame of the pattern with a slope along y-direction (Vx2 and Vy1 accordingly).

'O' is a scenery dependent offset which might be caused by ambient light, and 'A' is a global amplitude which is a measure for the texture of the object as see by this pixel. 'A' may be used to generate an unbiased monochrome image of a surface texture of the measured object, which is not/minimally influenced by light sources. With the defined relation between M and the position, we can get a precise sub-pixel 2D value for a position of a collection of pre-defined points in an image.

Accordingly, a set of x/y coordinates in each patch of the projected pattern can be defined. A subpixel position of each set of x/y coordinates can be determined in the recorded images based on associated M values (i.e., an M value for x and an M value for y). The M values can be used as target points for a bundle adjustment calculation.

A subpixel position determination of a predefined spot in an image can be characterized by three values, a value for a binary coding of the patch (generated by a sequence similar to 2505), the M1 value for a position along x, and the M2 value for a position along y. For the M1/M2 values, the sub-pixel position in each image can be determined based on a number of pixels with a small difference between a defined (M1/M2) tuple and a measured M1/M2 value.

A number of pixels in each image (e.g., four) having the smallest difference in the M1/M2 value tuples and cover a small area (e.g., 2 by 2 pixel) can be selected by analysis. For the sub-pixel extraction of a given point, two planes can be established through these points. One plane can be defined by the values x, y, M1, and a second plane can be defined by x, y, M2. A reduction of each plane to a predefined value of M1 for the first plane and M2 for the second plane results in two defined lines. An intersection of the two lines produces a sub-pixel position in x and y coordinates for the pre-defined spot.

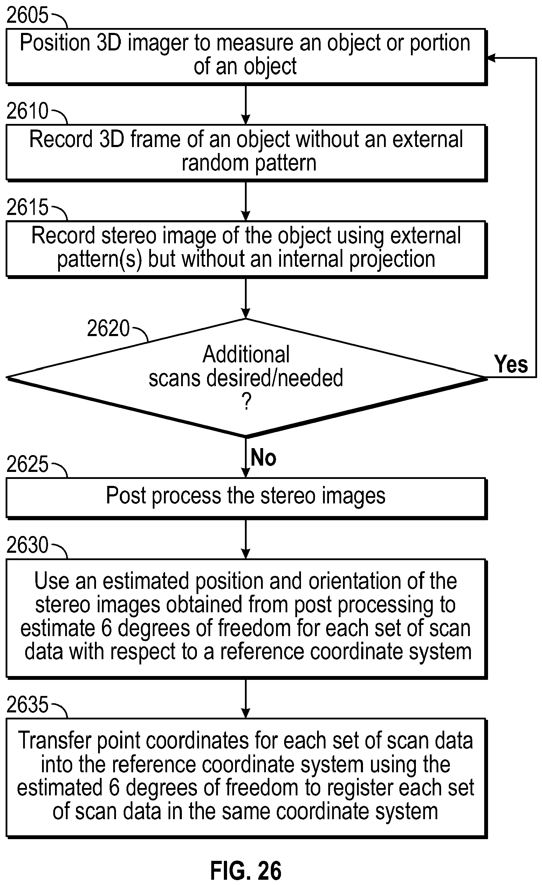

FIG. 26 is a flow diagram illustrating a method of scan data registration. At block 2605, a 3D imager of a system, for example system 2300, is positioned in relation to an object or portion of an object to be scanned by the 3D imager. At block 2610, the 3D imager can record a 3D frame of an object (surface) without using an external pattern. At block 2615, the 3D imager can record a stereo image of an object (surface) using an external random pattern (e.g., the patterns of FIGs. 24A-24C) or series of patterns (e.g., the patterns of FIGs. 25A-25D) projected from an external projector. At block 2620, the user can determine whether additional scans of the object are needed or desired.

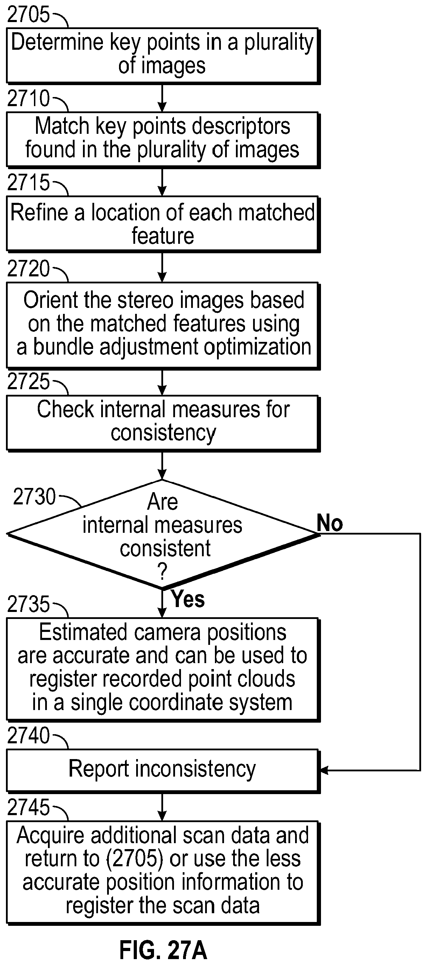

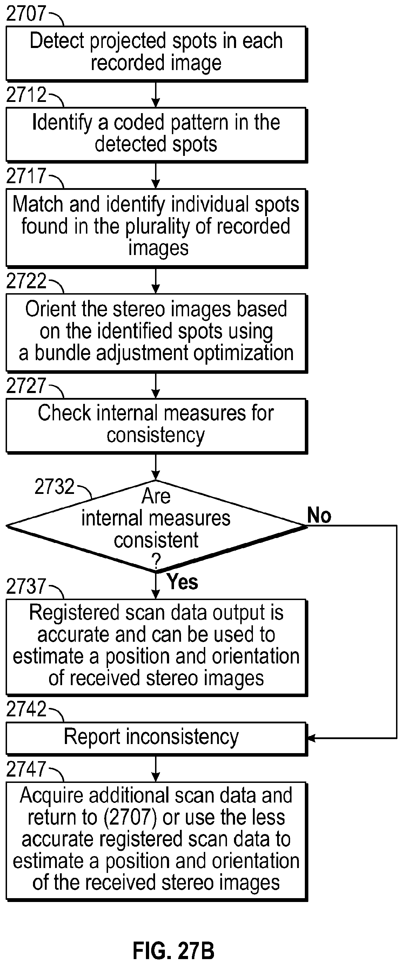

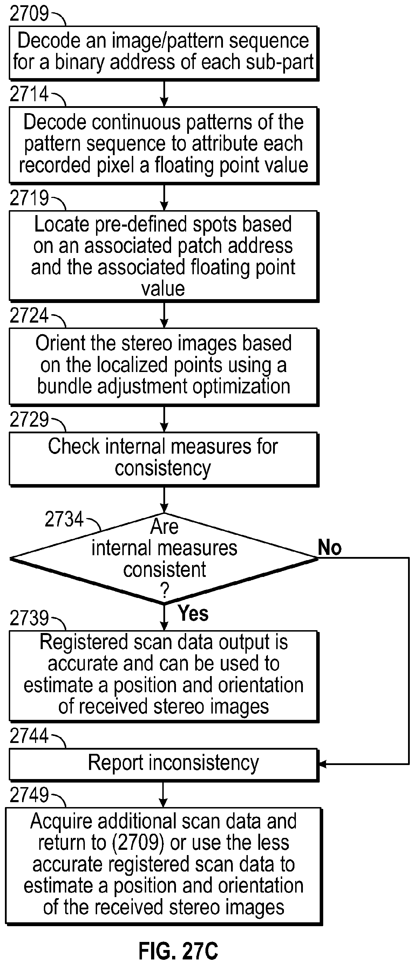

If additional scans are needed or desired, the method returns to block 2605. If additional scans are not needed or desired, the method proceeds to block 2625 where the recorded stereo image(s) are post-processed by the system. Post-processing follows a photogrammetric workflow which is detailed in Fig. 27. At block 2630, an estimated position and orientation of the 3D imager resultant from the post-processing can be used by the system to estimate 6 degrees of freedom for each set of scan data with respect to a reference coordinate system. At block 2635, point coordinates for each set of scan data can be transferred into the reference coordinate system using the estimated 6 degrees of freedom thereby registering each set of scan data in the same coordinate system.

FIG. 27A is a flow diagram illustrating a method of post-processing stereo images by detecting key points in a random pattern, for example, a single projected external pattern like those illustrated in FIGs. 24A-24C. At block 2705, a system, for example system 2300, can determine the key points in a plurality of images, which are invariant to scale and rotation. A descriptor is then associated with each key point using the pixels around the key point. The descriptor, which can be for example, a vector of float or binary values, act like the finger print of this key point. At block 2710, the system can match the key point descriptors which have been found between all recorded images. At block 2715, the system can refine a location of each matched feature by using for example a least square template image matching in order to improve the localization accuracy. At block 2720, the system can orient the stereo image(s) based on the matched features by using a bundle adjustment optimization. At block 2725, optionally, the system can perform a quality check to determine whether internal measures are consistent, i.e., consistency of a stereo base-line length.

In some embodiments, the external projector can be treated as a camera. Images projected from projector/camera can be a defined pattern. Treating the projector as a camera allows for a global reference which can be added to every other image.

If, at block 2730, the internal measures are consistent, the method proceeds to block 2735 where the system deems the registered scan data output to be accurate and uses the accurate estimate of position and orientation of the 3D imager to register recorded point clouds in a single coordinate system. If, at block 2730, the internal measures are not consistent, the method proceeds to block 2740 where the system reports the inconsistency. At block 2745, the system can acquire additional scan data in order to rectify the inconsistency and return to block 2705, or use less accurate position and orientation of the received stereo image(s) to register scan data.

FIG. 27B is a flow diagram illustrating a method of post-processing stereo images by decoding a projected pattern, for example, a single projected external pattern like that illustrated in FIG. 24D. At block 2707, a system, for example system 2300, can detect projected spots in each recorded image. At block 2712, the system can identify a coded pattern in the detected projected spots. At block 2717, the system can match and identify individual spots between the recorded images. At block 2722, the system can orient the stereo image(s) based on the identified spots by using a bundle adjustment optimization. At block 2727, optionally, the system can perform a quality check to determine whether internal measures are consistent, i.e., consistency of a stereo base-line length.

If, at block 2732, the internal measures are consistent, the method proceeds to block 2737 where the system deems the registered scan data output to be accurate and uses the accurate estimate of position and orientation of the 3D imager to register scan data output. If, at block 2732, the internal measures are not consistent, the method proceeds to block 2742 where the system reports the inconsistency. At block 2747, the system can acquire additional scan data in order to rectify the inconsistency and return to block 2707, or use less accurate position and orientation of the received stereo image(s) to register scan data.

FIG. 27C is a flow diagram illustrating a method of post-processing stereo images by decoding a series of pattern which might consist of a sequence of binary projections, for example, a single projected external pattern like those illustrated in FIG. 25A, and some patterns as presented in FIGs. 25B-25D. At block 2709, a system, for example system 2300, can decode an image/pattern sequence for a binary address of each sub-part. At block 2714, the system can decode continuous patterns of image/pattern sequence to attribute each recorded pixel a floating-point value. At block 2719, the system can locate pre-defined spots based on an associated patch address and the associated floating-point value. At block 2724, the system can orient the stereo image(s) based on localized points by using a bundle adjustment optimization. At block 2729, optionally, the system can perform a quality check to determine whether internal measures are consistent, i.e., consistency of a stereo base-line length.

If, at block 2734, the internal measures are consistent, the method proceeds to block 2739 where the system deems the registered scan data output to be accurate and uses the accurate estimate of position and orientation of the 3D imager to register scan data output. If, at block 2734, the internal measures are not consistent, the method proceeds to block 2744 where the system reports the inconsistency. At block 2749, the system can acquire additional scan data in order to rectify the inconsistency and return to block 2709, or use a less accurate position and orientation of the received stereo image(s) to register scan data.

Accordingly, the embodiments disclosed herein describe a system that can perform scan data registration using a non-calibrated (low price) projector and photogrammetric processing in a straightforward and automated fashion. The system addresses the problem associated with conducting multiple scans on the same object, which require each of the multiple scans to be registered/transferred into one coordinate system. The registration/transfer of multiple scans often requires additional hardware and software, and is semi-automated process necessitating manual surface featuring that is time consuming.

The system disclosed herein can project a random pattern or series of patterns on a surface of an object, take images of the surface of the object via an imager/camera, orient the images into a single coordinate system and automatically register scan data into a unique coordinate system. Photogrammetric post-processing provided by the described system delivers the position of the cameras for a 3D imager in a single coordinate system. Scan data might have an origin which does not coincide with one of the cameras of the system. A pre-calibrated transformation is applied to go from the camera position/orientation to the position/orientation of the corresponding scan data.

Technical effects and benefits of the disclosed embodiments include, but are not limited to providing a system that does not require additional hardware in or at the 3D scanner to perform the registration/transfer of multiple scans, providing a system that utilizes a low-cost projector to project a random (i.e., no geometrical features) pattern next to the measured object, performing position and orientation calculations in post-processing using photogrammetry and registering scan data using the position and orientation of images/cameras resultant from the post-processing. In addition, a quality check can be performed based on internal measures using an intrinsic error estimation, e.g., based on a baseline comparison. The quality check can utilize the fixed orientation of a 3D imager, estimating left and right cameras of the 3D imager independently and measuring an overall registration error based on differences of camera orientation from shot to shot (e.g., baseline length or relative camera rotation).

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

**Claims**

1. A three-dimensional (3D) measuring system comprising:

    an external projector;
    an imager device having a projector and one or more projectors arranged in a predetermined geometric relationship, the one or more projectors having a photosensitive array with a plurality of pixels that transmit a signal in response to a wavelength of light, the projector projecting a pattern of light that includes at least one element at the wavelength of light; and

one or more processors operably coupled to the external projector, the projector and the one or more projectors, wherein the one or more processors are responsive to executable computer instructions when executed on the one or more processors for:

projecting one or more random patterns on an object with the external projector;
recording one or more images of the object;
estimating a position and orientation of the imager device; and
registering scan data generated from the estimated position and orientation of the imager device into a coordinate system.

2. The 3D measuring system of claim 1, wherein the one or more processors are further operable to post-process the one or more images.

3. The 3D measuring system of claim 2, wherein post-processing the one or more images includes finding a plurality of projected features within the one or more images, matching the projected features within the one or more images and orienting the one or more images based on the matched projected features.

4. The 3D measuring system of claim 1, wherein the one or more processors are further operable to define a reference coordinate system based on a first scan position using a camera of the one or more cameras.

5. The 3D measuring system of claim 4, wherein the one or more processors are further operable to transfer point coordinates associated with the scan data into the reference coordinate system using the estimated six degrees of freedom.

6. The 3D measuring system of claim 1, wherein the projected one or more random patterns are blue in color.

7. The 3D measuring system of claim 1, wherein the projected one or more random patterns are one of: a pattern of random blobs in which a pixel is either on or off, a pattern with 2D shapes having multiple structures, a pattern of random blobs in which pixels of the pattern are assigned different values of gray or a pseudo-random dot pattern.

8. A method of scan data registration, the method comprising:

projecting one or more random patterns on an object;
recording one or more stereo images of the object;
estimating a position and orientation of an imager device; and
registering scan data generated from the estimated position and orientation of the imager device into a coordinate system.

9. The method of claim 8, further comprising post-processing the one or more stereo images.

10. The method of claim 9, wherein post-processing the one or more stereo images includes finding one or more projected features within the one or more stereo images, matching the projected features within the one or more stereo images and orienting the one or more stereo images based on the matched projected features.

11. The method of claim 8, further comprising estimating six degrees of freedom for the scan data with respect to a reference coordinate system.

12. The method of claim 11, further comprising transferring point coordinates associated with the scan data into the reference coordinate system using the estimated six degrees of freedom.

13. The method of claim 8, wherein projected one or more random patterns are one of: a series of patterns, wherein the series includes a full image and a plurality of sub-images, a series of patterns, wherein each pattern in the series is generated according to a cosine squared amplitude distribution, a series of patterns, wherein each pattern in the series is generated according to a cosine squared amplitude distribution in which a period is smaller than a single patch or a series of patterns, wherein each pattern in the series is generated based on one of more intensity slopes projected over a full patch.

14. The method of claim 13, wherein portions of the projected one or more random patterns form a uniquely coded structure that can be identified in the images.

15. The method of claim 13, wherein portions of the projected one or more random patterns form a uniquely coded structure that can be identified in the images.

FIG. 1

**FIG. 2**

EP 3 709 270 A1

FIG. 3

SECTION A-A

FIG. 4

EP 3 709 270 A1

SECTION B-B
**FIG. 5A**

600

602

602

**FIG. 5B**

30

624

620    622

**FIG. 6A**

60

626

624

620

342

622

**FIG. 6B**

FIG. 6C

**FIG. 7**

700

830

820

810

**FIG. 8**

960

930

932

900

910

920

921

911

924

b

a

918

914

928

c

940

916

922

926

912

950

**FIG. 9**

**FIG. 10**

**FIG. 11**

FIG. 12A

FIG. 12B

**FIG. 13A**

FIG. 13B

FIG. 13C

EP 3 709 270 A1

FIG. 13E

FIG. 13D

**FIG. 14A**

**FIG. 14B**

EP 3 709 270 A1

FIG. 14D

FIG. 14C

**FIG. 15**

FIG. 16

EP 3 709 270 A1

FIG. 17

PORTION OF SECTION B-B
**FIG. 18**

**FIG. 19A**

**FIG. 19B**

SECTION C-C
**FIG. 19C**

1714

1726

1727

1724

1715

**FIG. 20A**

1714

1715

1727

1726

1724

**FIG. 20B**

FIG. 21A

FIG. 21B

FIG. 21C

EP 3 709 270 A1

FIG. 22B

FIG. 22A

**FIG. 22C**

**FIG. 22D**

EP 3 709 270 A1

FIG. 23A

FIG. 23B

FIG. 23C

2405

**FIG. 24A**

2410

**FIG. 24B**

2415

**FIG. 24C**

2420

**FIG. 24D**

2420

**FIG. 24E**

**FIG. 25A**

FIG. 25B

FIG. 25C

EP 3 709 270 A1

FIG. 25D

EP 3 709 270 A1

2605
Position 3D imager to measure an object or portion of an object

2610
Record 3D frame of an object without an external random pattern

2615
Record stereo image of the object using external pattern(s) but without an internal projection

2620
Additional scans desired/needed ?

**Yes**

**No**

2625
Post process the stereo images

2630
Use an estimated position and orientation of the stereo images obtained from post processing to estimate 6 degrees of freedom for each set of scan data with respect to a reference coordinate system

2635
Transfer point coordinates for each set of scan data into the reference coordinate system using the estimated 6 degrees of freedom to register each set of scan data in the same coordinate system

**FIG. 26**

2705
Determine key points in a plurality of images

2710
Match key points descriptors found in the plurality of images

2715
Refine a location of each matched feature

2720
Orient the stereo images based on the matched features using a bundle adjustment optimization

2725
Check internal measures for consistency

2730
Are internal measures consistent ?

No

Yes

2735
Estimated camera positions are accurate and can be used to register recorded point clouds in a single coordinate system

2740
Report inconsistency

2745
Acquire additional scan data and return to (2705) or use the less accurate position information to register the scan data

**FIG. 27A**

2707 — 
Detect projected spots in each
recorded image

2712 — 
Identify a coded pattern in the
detected spots

2717 — 
Match and identify individual spots
found in the plurality of recorded
images

2722 — 
Orient the stereo images based
on the identified spots using
a bundle adjustment optimization

2727 — 
Check internal measures for
consistency

2732 — 
Are
internal measures
consistent
?

**No**

**Yes**

2737 — 
Registered scan data output is
accurate and can be used to
estimate a position and orientation
of received stereo images

2742 — 
Report inconsistency

2747 — 
Acquire additional scan data and
return to (2707) or use the less
accurate registered scan data to
estimate a position and orientation
of the received stereo images

**FIG. 27B**

2709

Decode an image/pattern sequence
for a binary address of each sub-part

2714

Decode continuous patterns of the
pattern sequence to attribute each
recorded pixel a floating point value

2719

Locate pre-defined spots based
on an associated patch address
and the associated floating point
value

2724

Orient the stereo images based
on the localized points using a
bundle adjustment optimization

2729

Check internal measures for
consistency

2734

Are
internal measures
consistent
?

No

Yes

2739

Registered scan data output is
accurate and can be used to
estimate a position and orientation
of received stereo images

2744

Report inconsistency

2749

Acquire additional scan data and
return to (2709) or use the less
accurate registered scan data to
estimate a position and orientation
of the received stereo images

FIG. 27C

| | Europäisches Patentamt European Patent Office Office européen des brevets | **EUROPEAN SEARCH REPORT** | Application Number EP 20 16 1783 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 8 970 823 B2 (FARO TECH INC [US]) 3 March 2015 (2015-03-03) * abstract * * column 1, line 53 - line 56 * * column 3, line 57 - column 7, line 62 * * figure 1 * | 1,7,8, 13-15 | INV. G06T7/33 G06T7/521 G06T7/593 |
| Y | US 2018/238681 A1 (TOHME YAZID [US] ET AL) 23 August 2018 (2018-08-23) * abstract * * paragraph [0126] - paragraph [0158] * * figures 18G, 18K * | 1-15 | |
| Y | JOAQUIM SALVI ET AL: "A state of the art in structured light patterns for surface profilometry", PATTERN RECOGNITION, vol. 43, no. 8, 1 August 2010 (2010-08-01) , pages 2666-2680, XP055146133, ISSN: 0031-3203, DOI: 10.1016/j.patcog.2010.03.004 * abstract * * section 3.1.1. * * table 1 * | 1-15 | TECHNICAL FIELDS SEARCHED (IPC) G06T |
| Y | JONGWOO LIM: "Optimized projection pattern supplementing stereo systems", 2009 IEEE INTERNATIONAL CONFERENCE ON ROBOTICS AND AUTOMATION : (ICRA) ; KOBE, JAPAN, 12 - 17 MAY 2009, IEEE, PISCATAWAY, NJ, USA, 12 May 2009 (2009-05-12), pages 2823-2829, XP031510020, ISBN: 978-1-4244-2788-8 * abstract * * section 1.B * * figure 6 * | 1-15 | |

The present search report has been drawn up for all claims

| Place of search | Date of completion of the search | Examiner |
|---|---|---|
| Munich | 17 July 2020 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 1783

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2020

| Patent document cited in search report | | Publication date | Patent family member(s) | Publication date |
|---|---|---|---|---|
| US 8970823 | B2 | 03-03-2015 | DE 202012104890 U1 | 05-03-2013 |
| | | | US 2014168380 A1 | 19-06-2014 |
| | | | US 2015042759 A1 | 12-02-2015 |
| US 2018238681 | A1 | 23-08-2018 | DE 112016001888 T5 | 04-01-2018 |
| | | | US 2016313114 A1 | 27-10-2016 |
| | | | US 2018238681 A1 | 23-08-2018 |
| | | | US 2019383603 A1 | 19-12-2019 |
| | | | WO 2016172411 A1 | 27-10-2016 |

EPO FORM P0459

For more details about this annex : see Official Journal of the European Patent Office, No. 12/82